# EUROPEAN PATENT SPECIFICATION

(11) **EP 3 496 843 B1**
(45) Date of publication and mention of the grant of the patent: **07.10.2020**
(21) Application number: 17704272.8
(22) Date of filing: 10.02.2017
(51) Int. Cl.: B01D 61/58, B01D 61/00, B01D 61/02, B01D 61/24, B01D 61/42, B01D 61/06

(54) **FLUID PURIFICATION USING FORWARD OSMOSIS, ION EXCHANGE, AND RE-CONCENTRATION**
FLUIDREINIGUNG DURCH VORWÄRTSOSMOSE, IONENAUSTAUSCH UND ANREICHERUNG
PURIFICATION DE FLUIDE PAR OSMOSE DIRECTE, ÉCHANGE D'IONS ET RE-CONCENTRATION

(30) Priority: 12.08.2016 WO PCT/EP2016/069305
(43) Date of publication of application: 19.06.2019
(73) Proprietor: fluvicon GmbH, 8700 Leoben (AT)
(72) Inventor: GRIESSLER, Thomas, 8042 Graz (AT)
(74) Representative: Dilg, Haeusler, Schindelmann Patentanwaltsgesellschaft mbH
(86) International application number: PCT/EP2017/053078
(87) International publication number: WO 2018/028839

(56) References cited:
- WO-A1-2014/052025
- GB-A- 2 249 307
- US-A- 4 141 825
- US-A1- 2005 145 568
- US-A1- 2014 224 718
- US-A1- 2014 346 105
- LAIA LLENAS ET AL: "Nanofiltration as pretreatment for scale prevention in seawater reverse osmosis desalination", DESALINATION AND WATER TREATMENT : SCIENCE AND ENGINEERING ; DWT, vol. 36, no. 1-3, 31 December 2011 (2011-12-31), pages 310-318, XP055316730, UK ISSN: 1944-3994, DOI: 10.5004/dwt.2011.2767

## Description

The invention relates to apparatuses for purifying fluid.

Conventionally, membrane separation procedures, in particular based on reverse osmosis, are applied for purifying fluid such as water. In such a procedure, a pressure is applied to the entire raw fluid together with all contaminants being thereby pressed against the membrane. Since the pores of the membrane are too small for allowing the contaminants to pass the pores, the contaminant will accumulate directly at the membrane. This may cause problems such as fouling and scaling, and after some time damage of the membrane. For this reason, it is required to pre-treat or pre-process the raw fluid to be purified before it is brought in interaction with the reverse osmosis membrane. This preprocessing may involve sieving, adding chemicals (for coagulation and flocculation), sedimentation, filtering (for instance using sand, in a single stage or a serial dual stage configuration), addition of antiscalants, and microfiltration. This is cumbersome and requires a considerable amount of energy.

An alternative procedure of purifying fluid such as water is a thermal treatment based on the principle of distillation, in particular multi stage flash distillation (MSF). Although this process is reliable, it involves an even higher energy consumption (for instance 7 to 10 kWh/m³) than reverse osmosis.

US 5,098,575 discloses a method and an apparatus for reducing the concentration of a first substance in a first liquid by subjecting the first liquid to natural osmosis, via a first semipermeable body, with respect to an intermediate liquid, which intermediate liquid is a solution or suspension of a second substance in a second liquid, the second liquid being the same as the first liquid and passing through the first semipermeable body, the second substance being of larger molecular size than the first substance and not passing through the first semi-permeable body, whereby the quantity of the second liquid in the intermediate liquid is increased, and then subjecting the intermediate liquid to reverse osmosis under pressure via a second semipermeable body to pass therethrough the second liquid.

US 7,901,577 discloses that desalination is carried out by a hybrid ion exchange-nanofiltration process in which ion exchange is followed by pressure-driven nanofiltration. Monovalent ions of sodium and chloride of saline water are exchanged for equivalent concentrations of poly-valent ions (for example, sodium ions for magnesium ions or chloride ions for sulfate ions) when passed through ion exchangers in the form of those poly-valent ions. The resultant solution has a lower osmotic pressure than the initial solution containing monovalent sodium and chloride ions, and requires less transmembrane pressure for membrane desalination compared to traditional reverse osmosis. The concentrated reject stream from the membrane process is used as regenerant for the exhausted ion exchanger, which has been converted to monovalent anionic or cationic form.

WO 2011/059751 discloses separation processes using engineered osmosis generally involving the extraction of solvent from a first solution to concentrate solute by using a second concentrated solution to draw the solvent from the first solution across a semi-permeable membrane. Enhanced efficiency may result from using low grade waste heat from industrial or commercial sources.

WO 2010/067063 discloses a process for separating solvent from a solution, said process comprising passing the solution through a selective membrane under reverse osmosis conditions to separate solvent from the solution, or separating solvent from the solution by thermal methods to produce a residual solution having an increased solute concentration, and intermittently passing at least a portion of the solution on the retentate-side of the selective membrane and/or at least a portion of the residual solution through a nanofiltration membrane to separate further solvent from the portion of solution.

WO 2014/052025 discloses a system for treating water, comprising an electrical separation unit having an inlet and an outlet; and a reverse osmosis unit having an inlet and an outlet, wherein the inlet of the reverse osmosis unit is in communication with the outlet of the electrical separation unit.

US 4,141,825 discloses a desalination process system combining electrodialysis, reverse osmosis and brine concentration with by-product recovery.

GB 2 249 307 A discloses a process for purifying water by means of a combination of electrodialysis and reverse osmosis.

US 2014/0346105 A1 discloses a system capable of removing wastes from blood, wherein the system comprises a dialysate regeneration chamber comprising a dialysate regeneration fabric. The dialysate regeneration fabric comprises an ion exchanger, ion-selective activated fibers, and urease disposed between the ion exchanger and the activated carbon fibers.

US 2014/0224718 A1 discloses separation processes using osmotically driven membrane systems involving the extraction of solvent from a first solution to concentrate solute by using a second concentrated solution to draw the solvent from the first solution across a semi-permeable membrane.

US 2005/0145568 A1 discloses an osmotic desalination process that involves the extraction of water from a first solution, such as seawater, by using a second concentrated solution to draw the water from the first solution across a semi-permeable membrane.

However, it is still difficult to efficiently purify fluid with reasonable energy consumption and high flexibility concerning purifyable raw fluids.

It is an object of the invention to provide a flexible system to efficiently purify fluid with reasonable energy consumption.

In order to achieve the object defined above, an apparatus for purifying fluid according to the independent claim is provided.

According to an exemplary embodiment of a first aspect of the invention, an apparatus for purifying fluid is provided, wherein the apparatus comprises an ion removal section configured for removing at least part of raw fluid ions (in particular for removing at least part of dissolved salt) of the fluid to be purified, wherein the ion removal section is configured for bringing the fluid to be purified in interaction with a carrier fluid to thereby obtain a first fluid portion comprising the carrier fluid with raw fluid ions therein and a separate second fluid portion comprising the fluid to be purified and further impurities, a purifying section configured for purifying the fluid to be purified after removal of the raw fluid ions (in particular in a separate further process), wherein the purifying section comprises an osmosis unit configured for purifying the fluid to be purified, after removal of raw fluid ions, by osmosis, and a draw solution supply path configured for supplying at least part of the first fluid portion to the osmosis unit so that the raw fluid ion enriched first fluid portion serves as draw solution during osmosis.

According to another exemplary embodiment of the first aspect, a method of purifying fluid is described, wherein the method comprises removing at least part of raw fluid ions of the fluid to be purified, and purifying the fluid to be purified after the removal of the raw fluid ions.

According to still another exemplary embodiment of a second aspect, an apparatus for purifying fluid is described, wherein the apparatus comprises an osmosis unit configured for purifying the fluid to be purified by forward osmosis (in particular by an osmotic diffusion) of the fluid to be purified through an osmosis membrane (i.e. any membrane suitable for, capable of or specifically configured for supporting the phenomenon of osmosis) into a chamber comprising dissolved first ions (in particular first cations and first anions), optionally an ion exchange unit configured for exchanging at least part of the first ions (in particular at least part of at least one of the first cations and the first anions), by second ions of an exchange medium (in particular at least one of second cations and second anions), and a re-concentration unit configured for separating the purified fluid (which may also be denoted as permeate or product fluid), optionally after the ion exchange, into further purified fluid and into a re-concentrate (which may also be denoted as retentate), optionally enriched with the exchange medium, by degassing.

According to another exemplary embodiment of the second aspect, a method of purifying fluid is described, wherein the method comprises purifying the fluid to be purified by forward osmosis of the fluid to be purified through an osmosis membrane into a chamber comprising dissolved first ions, in particular first cations and first anions, optionally subsequently exchanging at least part of the first ions, in particular at least part of at least one of the first cations and the first anions, by second ions of an exchange medium, in particular at least one of second cations and second anions, by an ion exchange unit, and separating the purified fluid, optionally after the ion exchange, into further purified fluid and into a re-concentrate, being optionally enriched with the exchange medium, by degassing.

In the context of the present application, the term "fluid" may particularly denote a liquid and/or a gaseous medium, optionally comprising solid particles. In the context of the present application, the term "raw fluid ions" may particularly denote charged particles or ions, i.e. cations and/or anions, being included in the impure (in particular water-based and/or oil-based) fluid to be purified, apart from other (in particular organic and/or in organic) further impurities. Thus, the term denotes ions included in the raw fluid which shall be purified by the apparatus and the method.

In the context of the present application, the term "after removal of the raw fluid ions" may particularly denote that the subsequent procedure of purifying, or more specifically of further purifying, the fluid is carried out after the raw ions removal procedure is finished. In other words, the raw ions removal procedure can be considered as a preceding procedure preparing the fluid to be purified for a more efficient subsequent or succeeding actual (in particular osmosis-based) purification procedure.

In the context of the present application, the term "forward osmosis" may particularly denote an osmotic process that uses a semi-permeable membrane to effect separation of a fluid (such as water) from dissolved solutes and/or other contaminants. The driving force for this separation is an osmotic pressure gradient, such that a draw solution of high concentration (relative to that of the feed solution), is used to induce a net flow of the fluid through the membrane into the draw solution, thus effectively separating the feed fluid (i.e. the fluid to be purified) from its solutes and other contaminants. In contrast to forward osmosis, the completely different process of reverse osmosis uses hydraulic pressure as the driving force for separation, which serves to counteract the osmotic pressure gradient that would otherwise favor fluid flow from a permeate to a feed.

In the context of the present application, the term "ion exchange" may particularly denote an exchange of ions (i.e. cations and/or anions) between two electrolytes or between an electrolyte solution and a complex (such as an ion exchange matrix, which may comprise resin, gel, etc.). The term may be used to denote the processes of purification, separation, and decontamination of aqueous and other ion-containing solutions with ion exchangers such as solid polymeric or mineralic ion exchangers, or any other kind of ion exchangers.

In the context of the present application, the term "degassing" may particularly denote a separation procedure between purified fluid (in particular purified liquid such as water) on the one hand and re-concentrate enriched with (in particular gaseous and/or electrically neutral) exchange medium on the other hand which converts (for instance pressure driven, thermally and/or by membrane degassing) selectively ions of the exchange medium into a gas. Such a gas can be easily removed from the (in particular liquid) purified fluid.

According to an exemplary embodiment of a first aspect of the invention, a fluid under purification is made subject to a pre-purifying procedure in which salt dissolved in the form of raw fluid ions in the fluid to be purified is partly or completely removed from the rest of the fluid to be purified. An actual or main purification procedure is carried out only after having completed this pre-purifying procedure. By taking this measure, the fluid to be purified is prepared to have a smaller or even negligible salt concentration which renders a subsequent purification, in particular by osmosis, significantly more efficient or in some cases even renders the fluids to be purified feasible to be purified by osmosis or the like. The reason for this is that an osmosis based main purification procedure is based on a pronounced gradient or an imbalance of the ion concentrations in the fluid to be purified on the one hand and in the draw solution of an osmosis unit on the other hand. When already the fluid to be purified has a high intrinsic raw fluid ions concentration (as it may occur naturally for instance in oil bore technology or mining technology), the efficiency of the (in particular osmosis based) purifying procedure may suffer in view of the small concentration difference between its raw ions in the fluid to be purified and working ions in the draw solution of the osmosis unit. Reducing the raw ions concentration prior to the purifying procedure thereby increases the flexibility and range of fluids under purification being feasible for the main purification treatment by the apparatus and the method as described above, and increases the purification efficiency and flexibility.

According to an exemplary embodiment of a second aspect described herein, the procedures of forward osmosis, optionally ion exchanging, and re-concentration are synergetically combined in terms of fluid purification and are integrated in the framework of a preferably reversible operating, preferably closed cycle processing system. In particular, an ionic concentration gradient in combination with a forward osmosis membrane may be used as a purifying mechanism. The combination with (optionally ion exchange and with) re-concentration allows to efficiently recover a draw solution used for forward osmosis and to complete the purification. Such a robust and reliable processing system has the advantage of a significant reduction of the energy consumption on the fluid input side compared with conventional approaches. Also the energy consumption in the re-concentration unit can be kept small when the re-concentrate is separated from the purified fluid by degassing. It is for instance possible that, when an ion removal section and a purifying section are implemented, a single common re-concentration unit may be sufficient, thereby rendering the system compact and efficient, in particular when dissipated or waste heat is available (for instance from a neighbored power plant). By forward osmosis, the fluid is pre-purified (preferably, but not necessarily in a substantially pressureless process (i.e. without the need to supply substantial external pressure)) by allowing fluid, but not contaminants thereof, to pass any desired osmosis membrane capable of or suitable for supporting the phenomenon of osmosis due to a concentration difference of cations and anions in the fluid to be purified (low ion concentration) on one side of the osmosis membrane and in a draw solution (high ion concentration) on the opposing other side of the osmosis membrane. When configuring the osmosis membrane so that the cations and anions are substantially unable to pass the membrane for size reasons and/or charge reason, the only possible concentration equilibration procedure is diffusion of the fluid to be purified (but not of its contaminants) from the raw fluid via the membrane towards a chamber accommodating the draw solution with the high concentration of cations and anions. Subsequently but only optionally, the mixture of the pre-purified fluid and the ions (i.e. cations and anions) may be made subject of an ion exchange in which the ions of the mixture are exchanged by other ions of a specifically configured exchange medium. Following the osmosis stage and optionally the ion exchange stage, the fluid including ions can be re-concentrated by separating a first portion (for example, but not necessarily, a main portion) of the fluid from the exchanged ions dissolved in a second portion (for example, but not necessarily, a smaller portion) of the fluid. After this re-concentration, the first portion of the fluid constitutes the purified fluid (which may or may not be subsequently made subject to further purification, if desired), whereas the second portion of the fluid with the recovered exchange medium can be further processed to establish a closed cycle procedure. For this purpose, the second ions of the exchange medium can be substituted again by the previously mentioned original ions in a further ion exchange procedure (which can preferably be accomplished within the same ion exchange unit which has already been used for the previously mentioned ion exchange procedure, thereby regenerating the ion exchange unit) so that the resulting fluid with the recovered original ions can be used again as draw solution for the next batch of fluid to be purified. Highly advantageously, the re-concentration may be accomplished by generating a re-concentrate enriched with exchange medium by separating the purified fluid from the re-concentrate by degassing (i.e. converting the exchange medium in a gas phase being easily separable from the liquid purified fluid). In such an embodiment, a nanofiltration membrane can be omitted in the re-concentration unit. When the first ions used for a draw solution for the forward osmosis are also separable by degassing, they can form the basis of the re-concentrate separated from the purified fluid in the re-concentration unit (an ion exchange can then be omitted).

In the following, further exemplary embodiments of apparatuses and methods will be explained.

In an embodiment, the re-concentration unit is configured for separating the purified fluid into the further purified fluid and into the re-concentrate by at least one of the group consisting of pressure-induced degassing, and thermally induced degassing. More specifically, degassing may be triggered by a purely pressure driven treatment, by a purely temperature driven treatment, or by a combination of adjusting the temperature and the pressure for triggering degassing. For example, the mere adjustment of an appropriate pressure value may be sufficient for triggering, promoting or forcing a gaseous component to separate from a liquid component.

In an embodiment, the re-concentration unit is configured for separating the purified fluid into the further purified fluid and into the re-concentrate by at least one of the group consisting of cavitation, sonochemistry, sonication, ultrasonic degassing, vacuum degassing, freeze-pump-thaw cycles, and inert gas treatment. Therefore, various methods can be implemented in order to separate the re-concentrate from the further purified fluid involving degassing.

What concerns cavitation, such a separation may be triggered by a pressure variation induced (for example induced by the generation of ultrasonic sound) formation of gas bubbles (as re-concentrate) which can thereafter be separated from the further purified fluid (being in particular in a liquid phase). This separation may involve a contribution of the gas bubbles bubbling up and thereby leaving the further purified fluid. However, this separation may also involve a phenomenon that such gas bubbles collapse, thereby generating a shock wave (i.e. a high pressure) which may result in a self-actuating degassing. What concerns sonochemistry, degassing may be triggered more generally by acoustic waves, in particular a treatment with ultrasonic sound. In this context, also the phenomenon of sonoluminescence may occur describing light generation triggered by ultrasonic sound. Sonication covers all processes achieving degassing by influencing a fluid by acoustic waves.

Degassing by executing freeze-pump-thaw cycles may involve flash-freezing of the purified fluid to be further separated, followed by a thawing in a low-pressure or vacuum surrounding. During vacuum thawing, the fluid degasses in the form of gas (as re-concentrate) bubbling out of the liquid (as further purified fluid) due to the vacuum atmosphere.

What concerns degassing by an inert gas treatment, an inert gas can be pressed through the purified fluid to be further separated. By guiding the inert gas through the solution, the inert gas carries or drags the gas (as re-concentrate) to be separated from a liquid phase (as the further purified fluid) with it, thereby resulting in a separation. Descriptively speaking, the relatively large gas bubbles of the inert gas may take along smaller gas bubbles of the re-concentrate, thereby removing the gaseous component from the liquid component of the fluid to be purified.

In an embodiment, the ion removal section is configured for bringing the fluid to be purified in interaction with a carrier fluid (such as pure water) to thereby obtain a first fluid portion comprising raw fluid ions in the carrier fluid and a separate second fluid portion comprising the (raw fluid ions depleted) fluid to be purified and further impurities. Thus, ion removal may involve separation of the fluid under purification into two separate streams or flow paths. One of these streams or flow paths may be supplied to the purifying section for subsequent further purification, whereas the other stream or flow path may be further treated for recycling or recovering a carrier medium used for ion removal.

In an embodiment, the ion removal section is configured for supplying the first fluid portion to a carrier fluid recovery path for recovering at least part of the carrier fluid. In this path, the carrier fluid (for instance pure water or water with a small ion concentration) may be at least partly cleaned from the raw ions, so that it can be used again, for instance in a closed cycle configuration.

In an embodiment, the ion removal section comprises a raw fluid ion concentration unit configured for concentrating at least part of the first fluid portion. Concentrating the first fluid portion (now including a significant amount of raw fluid ions after the ion removal procedure) allows to reduce the volume of medium to be disposed, whereas a rest of the first fluid portion separated from the raw fluid ions can be re-injected into the ion removal section as cleaned carrier fluid or may be used for another purpose. Such a concentration may be also advantageous when the first fluid portion or part thereof shall be used for extraction or exploitation of salt.

In an embodiment, the ion removal section is configured for supplying the second fluid portion to the purifying section. Thus, the now raw ion depleted pre-purified fluid under purification can be forwarded to the purifying section where it can be efficiently purified, in particular by an osmosis procedure (thanks to the now small raw ion concentration of the second fluid portion).

In an embodiment, the ion removal section is configured for removing at least part of raw fluid ions of the fluid to be purified by dialysis or diffusion, in particular by at least one of electrodialysis, nanofiltration, multistage dialysis, Donnan dialysis, diffusion dialysis, capacitive deionisation, and supercapacitive deionisation. In the context of the present application, the term dialysis may particularly denote a diffusion-based process in which a dissolved medium (such as ions) moves or migrates from a higher concentration side to a lower concentration side, to thereby equilibrate a concentration gradient or difference. Such a concentration difference-based migration may be triggered for example using a dialysis membrane, or electrically. In an embodiment, it is also possible to embody a dialysis treatment by a low-pressure filtration or no pressure nanofiltration, i.e. pressureless nanofiltration. More specifically, nanofiltration for removing at least part of raw fluid ions can be implemented in terms of diffusion dialysis (in particular Donnan dialysis). Nanofiltration in this context may mean diffusion or dialysis using a nanofiltration membrane, in which a dialysate is located on the purified side and receives raw fluid ions. Descriptively speaking, nanofiltration may therefore be applied for salt recovery rather than for fluid recovery according to an exemplary embodiment of the invention: ions may be enriched in the dialysate. Implementing a series of multiple dialysis stages improves the efficiency of the raw fluid ions removal. Donnan dialysis is a separation process that utilizes counterdiffusion of two or more ions through an ionexchange membrane to achieve a separation. Diffusion dialysis is an ionexchange membrane separation process driven by a concentration gradient. Capacitive deionization may involve deionization of water or another fluid by applying an electrical potential difference over two porous (for instance carbon) electrodes. Ions with a negative charge are removed from the water and are stored in the positively polarized electrode. Likewise, positively charged ions are stored in the cathode, which is the negatively polarized electrode.

Generally, raw fluid ions removal may be accomplished by diffusion, which may involve dialysis supported by electric fields or without support by electric fields.

In an embodiment, the ion removal section is configured for removing at least part of raw fluid ions of the fluid to be purified by dialysis between the fluid to be purified and an ion depleted or ion free carrier fluid across a dialysis membrane. More specifically, the dialysis membrane must be configured to be permeable for at least part of the raw fluid ions and impermeable for other impurities of the fluid to be purified. A dialysis membrane based raw fluid ions depletion procedure can be established with low effort and high-efficiency. In an embodiment, the dialysis membrane is not permeable for all ions in the raw fluid, but only for specific, intentionally selected ions. These specific, intentionally selected ions (for instance only Na⁺ and Cl⁻) may then be exchanged. It is however alternatively also possible that all ions in the raw fluid are exchanged.

In an embodiment, the apparatus comprises a carrier fluid recovery unit configured for recovering carrier fluid carrying the removed raw fluid ions by removing at least part of the raw fluid ions from the carrier fluid. Thus, at least part of the carrier fluid being contaminated with raw fluid ions during the ion removal procedure may be recycled and can be re-used, for instance in a closed cycle system.

In an embodiment, the carrier fluid recovery unit is configured for removing raw fluid ions from the carrier fluid by an ion exchange of raw fluid ions carried by the carrier fluid by substitute ions of a substitute medium. For this purpose, an ion exchange unit may be implemented to substitute the raw fluid ions by substitute ions which can be easier removed from the carrier fluid in terms of a recovery or recycling procedure.

In an embodiment, the substitute medium is configured for being at least partly selectively removable from the carrier fluid by degassing, in particular based at least one of the group consisting of thermal separation of the substitute medium, separation from the carrier fluid by membrane degassing, pressure-induced degassing, thermally induced degassing, cavitation, sonochemistry, sonication, ultrasonic degassing, vacuum degassing, freeze-pump-thaw cycles, and inert gas treatment. As mentioned above in terms of the recovery of exchange medium in a re-concentration unit of an apparatus according to an exemplary embodiment, it is correspondingly possible to convert the substitute ions into a gas phase and/or into an electrically neutral state which simplifies their removal. For example, the mixture of substitute medium and carrier fluid can be heated to a temperature at which the substitute medium becomes gaseous and can be removed from the liquid carrier fluid (such as water). Also the implementation of a (in particular hydrophobic) degassing membrane, which may be permeable for the gaseous substitute medium and impermeable for aqueous carrier fluid, can trigger such a separation - in particular when the vapor pressure on an opposing side of the degassing membrane is small (which can be accomplished for instance by a vacuum or a strip gas).

What concerns removing the substitute medium from the carrier fluid by pressure-induced degassing, thermally induced degassing, cavitation, sonochemistry, sonication, ultrasonic degassing, vacuum degassing, freeze-pump-thaw cycles, and inert gas treatment specific reference is made to the above description of these processes. It is explicitly disclosed that the said above considerations also apply to the use of these processes for the here described purpose.

In an embodiment, the substitute medium is configured for being at least partly selectively removable from the carrier fluid by cryodeionisation. In this context, the term cryodeionisation (in particular cryodesalinisation) may denote a deionisation by freezing. In a corresponding embodiment, the fluid (as carrier fluid) may be frozen and the ions (which may be the substitute medium) to be removed may remain separate from the frozen fluid. For example, the ions may be separated from the frozen fluid as a salt layer on the frozen fluid which can be removed from the frozen fluid. Thereafter, the frozen fluid may be thawn or re-liquefied again and can be further processed as recovered carrier fluid (for instance liquid). Subsequently, the gaseous component forming the draw solution can be condensed again (for instance ammonium bicarbonate). Preferably, the inert gas is selected so that it does not condense during this procedure.

In all the described procedures in terms of degassing, the degassing architecture may use the pressure conditions (in particular parts or pressure conditions of the involved components) as a design parameter or control parameter for triggering degassing.

In an embodiment, the substitute medium comprises or consists of at least one of the group consisting of ammonium bicarbonate (NH₄HCO₃), a volatile solute, sulfurous acid, an ionic liquid, and a fluid with modifiable solubility. Generally, any medium may be used as substitute medium which can be substantially completely removed from the fluid (in particular water). Preferably, such a substitute medium should be easily and reliably available in an economically reasonable way.

An ammonium bicarbonate substitute medium has the property of being dissolvable in an aqueous solution at low temperature under formation of substitute ions (in particular NH₄⁺, HCO₃⁻), whereas such a substitute medium will form electrically neutral gases (in particular NH₃, CO₂) at higher temperatures, thereby simplifying separation of this kind of substitute medium from the carrier fluid. However, any other substitute medium behaving in a similar way can be used as well for a separation based on degassing.

Also a volatile solute (for instance SO₂) can be implemented as substitute medium. Sulfurous acid (H₂SO₃) dissociates in water into H⁺ and HSO₃⁻ and is therefore another appropriate selection for the substitute medium. Also ionic liquids are appropriate as substitute medium because they can be properly precipitated. Also so-called switchers, i.e. fluids capable of (in particular drastically) changing their solubility in the event of a stimulus can be used as substitute medium. Such a stimulus may be a change of pressure, a change of the pH value, a change of the temperature, or the presence or absence of a trigger medium (such as CO₂).

In an embodiment, the apparatus comprises a regeneration unit configured for at least partly regenerating selectively removed (in particular degassed and/or electrically neutral) substitute medium by converting it back into substitute ions. For instance using a cooling trap (i.e. reducing the temperature compared to the degassing procedure) may bring back the substitute medium into an ionic state.

In an embodiment, the regeneration unit is configured for supplying the regenerated substitute medium, converted back into substitute ions, for a subsequent further ion exchange with raw fluid ions carried by carrier fluid. Substitute ions recovered as described in the preceding paragraph may hence be recycled for anew use in the ion exchange unit.

In another embodiment, at least part of the raw fluid ions (for instance raw fluid cations and/or raw fluid anions) has an absolute value of a charge state in solution which is lower than an absolute value of a charge state of at least part of the substitute ions in solution. For example, the raw fluid may comprise a salt having monovalent ions such as NaCl, and the substitute medium may comprise a salt having multivalent ions such as MgSO₄. By taking this measure, the osmotic pressure of the solution may be reduced. Separation may be accomplished, for example, by nanofiltration. However, deposition may be also accomplished by any other membrane process, and is not limited to nanofiltration.

In an alternative embodiment, the ion removal section may be configured for removing at least part of raw fluid ions of the fluid to be purified by ion exchange.

In an embodiment, the purifying section comprises an osmosis unit configured for purifying the fluid to be purified, after at least partial removal of raw fluid ions, by osmosis, in particular by forward osmosis. More specifically, the purifying section may comprise an osmosis unit configured for purifying the fluid to be purified, after at least partial removal of raw fluid ions, by forward osmosis of the fluid to be purified through an osmosis membrane into a chamber comprising dissolved first ions, in particular first cations and first anions. Highly advantageously, the raw fluid ions depleted pre-purified fluid under purification may then be purified by osmosis (preferably by forward osmosis) with high-efficiency and low requirements concerning concentration of a draw solution of such an osmosis unit. The reason is that the salt or ion concentration of the fluid under purification has now been reduced in the ion removal section so that already moderate ion concentrations in the draw solution of the osmosis unit (which may be located downstream of the ion removal section) may be sufficient or appropriate for an osmosis based purification.

In an embodiment according to the invention, the apparatus comprises a draw solution supply path configured for supplying the first fluid portion or part thereof to the osmosis unit so that the raw fluid ion enriched first fluid portion serves as draw solution during osmosis. For the draw solution of the osmosis unit, a high ion concentration is desirable to obtain a high efficiency of the fluid purification by osmosis. Contrary to this requirements, the ion concentration in the fluid to be purified shall be small. For the latter purpose, the ion removal section has removed raw fluid ions from the fluid to be purified. During this procedure, a medium with a high raw fluid ions concentration has been obtained, which is normally considered as waste. However, this medium with the high raw fluid ions concentration may be used advantageously as draw solution during the osmosis and may be supplied to the osmosis unit by a bypass path from the ion removal section to the purifying section. Therefore, a highly efficient and resource saving system with a small amount of waste can be obtained.

As described above, the purifying section may comprise an optional ion exchange unit configured for exchanging at least part of the first ions, in particular at least part of at least one of the first cations and the first anions, by second ions, in particular at least one of second cations and second anions. The ion exchange unit may be arranged downstream of the osmosis unit in terms of the purification path.

In an embodiment, the second ions belong to an exchange medium being at least partly selectively removable from the purified fluid by degassing, in particular based at least one of the group consisting of thermal separation of the exchange medium, and separation from the purified fluid by membrane degassing. Hence, it is possible to convert the second or exchange ions into a gas phase and/or into an electrically neutral state which simplifies their separation from the purified fluid. For example, the mixture of exchange medium and fluid to be purified can be heated to a temperature at which the exchange medium becomes gaseous and can be removed from the liquid fluid under purification (such as water). Also the implementation of a (in particular hydrophobic) degassing membrane, which may be permeable for the gaseous exchange medium and impermeable for aqueous fluid to be purified, can trigger such a separation.

In an embodiment, the exchange medium comprises or consists of at least one of the group consisting of ammonium bicarbonate (NH₄HCO₃) a volatile solute, sulfurous acid, an ionic liquid, and a fluid with modifiable solubility. An exchange medium with ammonium bicarbonate has the property of being dissolved in an aqueous solution at low temperature under formation of exchange ions (in particular NH₄⁺, HCO₃⁻), whereas such an exchange medium will form electrically neutral gases (in particular NH₃, CO₂) at higher temperatures, thereby simplifying separation of this kind of exchange medium from the fluid to be purified. However, other types of exchange medium behaving in a similar way can be used as well for a separation based on degassing. What concerns the additional or alternative configuration of the exchange medium as volatile solute, sulfurous acid, an ionic liquid, and/or a fluid with modifiable solubility, specific reference to the above description of these materials for the substitute medium is made. It is explicitly disclosed that the said above considerations also apply to the use of these materials for the exchange medium.

In an embodiment, the apparatus comprises an exchange medium concentration unit configured for concentrating the exchange medium downstream of the ion exchange unit. Increasing the concentration of the exchange medium further increases the efficiency.

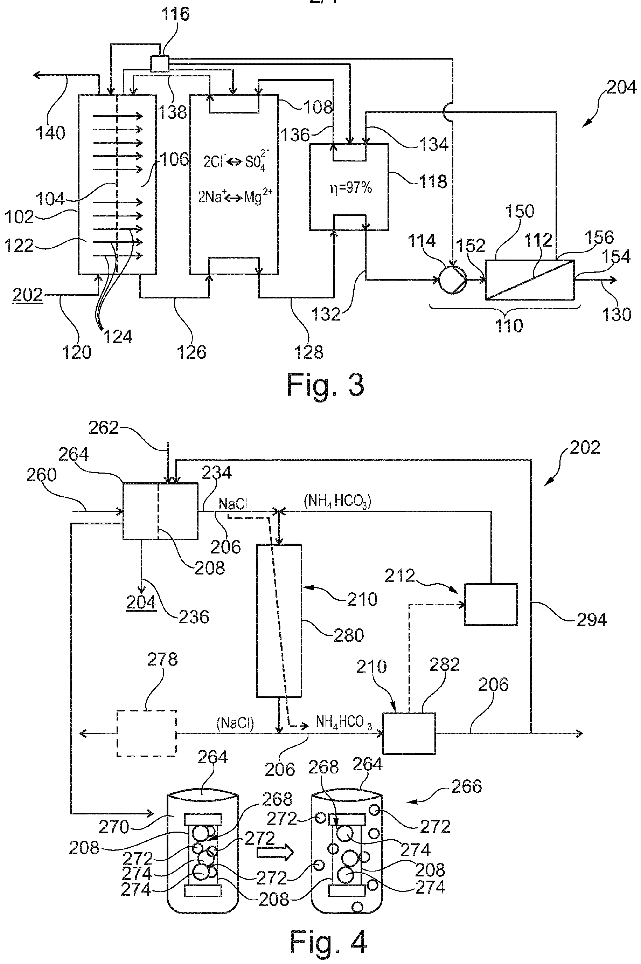

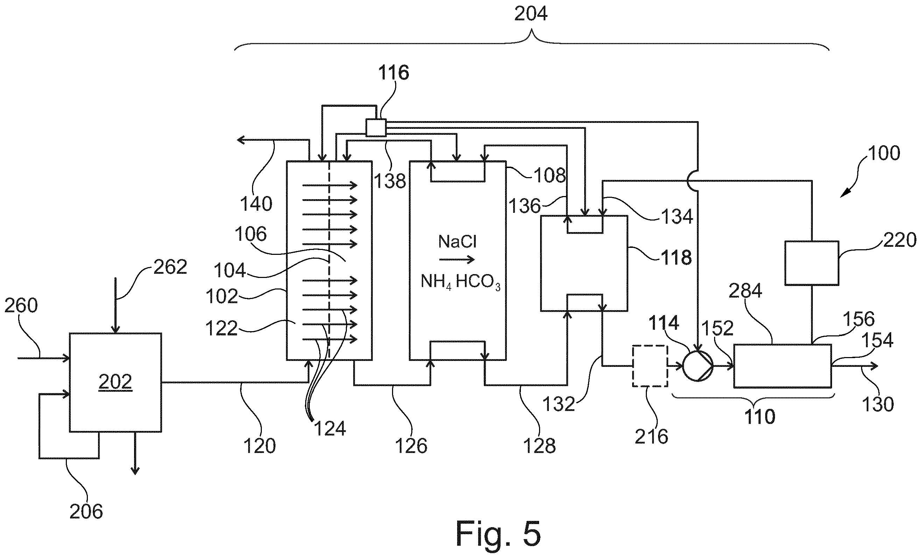

In an embodiment, the purifying section comprises a re-concentration unit configured for separating the purified fluid (in particular after an optional ion exchange) into further purified fluid and into a re-concentrate enriched with the respective ions, in particular anions and cations, or enriched with (in particular gaseous and/or electrically neutral) exchange medium to which the second ions belong. For example, this can be accomplished by a nanofiltration membrane (compare reference numeral 112 in Figure 3) or with a degassing unit (compare reference numeral 284 in Figure 5).

In an embodiment, the apparatus comprises an ion exchange unit configured for, prior to the re-concentration, exchanging at least part of the first ions, in particular at least part of at least one of the first cations and the first anions, by second ions of an exchange medium, in particular at least one of second cations and second anions, wherein the re-concentrate is enriched with the exchange medium. Thus, the optional ion exchange unit may substitute the first ions (constituting the drawing solution of the osmosis unit) by the second ions (forming the basis of the re-concentrate definable by degassing). Thus, the first ions may be optimized concerning their suitability for osmosis, whereas the second ions may be optimized concerning the suitability for re-concentration by degassing. Such an embodiment provides an excellent performance.

In an alternative embodiment (in which the previously mentioned ion exchange unit can be omitted), the re-concentrate is enriched with an exchange medium which is based on the first ions. In such an embodiment, an ion exchange unit may be omitted, which results in a compact configuration. In the described embodiment, the first ions used for the drawing solution in the osmosis unit are used as well in the re-concentration unit for being neutralized and converted in the gaseous state for separation from the rest of the purified fluid. In a preferred embodiment, a corresponding medium forming the first ions and the re-concentrate is ammonium bicarbonate.

In an embodiment, the apparatus comprises a regeneration unit configured for at least partly regenerating (in particular first or second) ions from the separated exchange medium. For example, this may be accomplished by condensing or precipitating the gaseous exchange medium, for example achievable by cooling the separated exchange medium. For the example of ammonium bicarbonate, NH₃ and CO₂ can be reconverted into NH₄HCO₃ (forming NH₄⁺ and HCO₃⁻ ions in an aqueous solution). In particular, the regeneration unit may be configured for supplying the regenerated ions to the ion exchange unit for a subsequent ion exchange or to the osmosis unit as draw solution. This promotes a closed cycle architecture and reduces the amount of waste involved with the purification.

In an embodiment, the degassing neutralizes at least part of the ions of the exchange medium, in particular into neutral gas, neutral liquid, and/or neutral solid. Additionally or alternatively, the degassing changes a phase state of at least part of the exchange medium.

In an embodiment, the ion exchange unit is composed of two separate ion exchange elements (such as columns), wherein a first ion exchange element accomplishes exchange of cations (for instance Na⁺ -> Mg²⁺), and a second ion exchange element accomplishes exchange of anions (for instance Cl⁻ -> SO₄²⁻). Other configurations are possible as well. A corresponding architecture may also be implemented for the ion removal section, i.e. in one branch of a dialysis system in which pure saltwater is branched off (alternatively to the exchange with ammonium bicarbonate). In particular, the raw fluid ion enriched stream of carrier fluid in the ion removal section may also exchange the raw fluid ions by other ions which reduce the osmotic pressure in the solution. For instance, monovalent primary raw fluid ions may be exchanged by multivalent secondary ions.

In an embodiment, the above described forward osmosis can be supported additionally by pressure-assisted osmosis. In such an embodiment, an additional pressure may be applied to the fluid to be purified so as to further promote the flow and increase the flow rate through the osmosis membrane. By taking this measure, throughput may be further increased.

In an embodiment according to the invention, the osmosis unit is configured for promoting a flow of the fluid to be purified through the osmosis membrane while inhibiting a flow of contaminants from the fluid to be purified towards the chamber (accommodating the draw solution) and while inhibiting the first ions (in particular the first cations and the first anions) as well as other impurities (suspended or in solution) from flowing through the osmosis membrane towards the fluid to be purified. This can be accomplished by correspondingly configuring the size of pores of the osmosis membrane. Additionally or alternatively, osmosis may also depend on the charge state of the particles and the osmosis membrane (as known by those skilled in the art as Coulomb's Law in addition to Donnan Exclusion Effect).

In an embodiment, the ion exchange unit is configured for exchanging at least part of the first anions by the second anions and/or at least part of the first cations by the second cations. For instance, it is possible that only the cations are exchanged. Alternatively, it is also possible that only the anions are exchanged. Also an exchange of both cations and anions is possible. The first anions and the first cations may be selected specifically so as to obtain a high efficiency of drawing pure fluid through the osmosis membrane. By substituting both the first anions by the second anions and the first cations by the second cations, it is possible to combine these advantages with the further advantage that the second anions and the second cations may be selected specifically so as to obtain an efficient re-concentration in the re-concentration unit.

In an embodiment, the ion exchange unit is configured for reversibly exchanging at least part of the ions (in particular at least part of the anions and/or at least part of the cations) prior to re-concentration and after re-concentration. As an example, such a reversible ion exchange may mean that a first ion exchange procedure (for instance 2 Cl⁻ -> SO₄²⁻ and/or 2 Na⁺ -> Mg²⁺) occurs in a forward fluid flow direction from the osmosis unit towards the re-concentration unit, and that an inverse second ion exchange procedure (for instance SO₄²⁻ -> 2 Cl⁻ and/or Mg²⁺ -> 2 Na⁺) occurs in a backward fluid flow direction from the re-concentration unit back to the osmosis unit. This allows to integrate the fluid purification process into a closed cycle procedure and keeps the amount of waste small.

According to an exemplary embodiment of the invention, the ion exchange in backward direction and the ion exchange in forward direction may be carried out in one and the same ion exchange unit. Alternatively, two separate ion exchange units may be implemented, one for the ion exchange in forward direction, and the other one for the ion exchange in backward direction. Ion exchange in backward direction may also function for regeneration of the ion exchange unit after the ion exchange in forward direction, and *vice versa.*

In an embodiment, the ion exchange unit is configured for exchanging back at least part of the ions (in particular at least part of the anions and/or at least part of the cations) after the ion exchanging by the respectively other ions (in particular anions and cations) by an ion exchange after re-concentration. The further ion exchange is accomplished between ions of the re-concentrate or retentate (which for instance does not pass a re-concentration membrane or the like, is separated by a thermal processing, etc.) and the respectively other anions and/or cations which have been exchanged in the pre-purified fluid upstream of the re-concentration unit.

In an embodiment, the re-concentration unit is configured for filtering the pre-purified fluid (in particular after the ion exchange) by a re-concentration membrane so that the purified fluid passes the re-concentration membrane, whereas at least part of the ion exchanged ions (in particular anions and cations) are retained by the re-concentration membrane and are therefore re-concentrated. For example, such a re-concentration membrane may be a nanofiltration membrane, an ultra-filtration membrane, a micro-filtration membrane and/or a reverse osmosis membrane. However, other types of membranes are possible as well. By accomplishing the re-concentration by a re-concentration membrane, the energy consumption may be kept very low.

Additionally or alternatively to the provision of a re-concentration membrane, the re-concentration unit may be configured for accomplishing the re-concentrating by a thermal treatment of the fluid. For example, the thermal treatment may be selected from a group consisting of multi-stage flashing, multi-effect distillation, and solar distillation.

Additionally or alternatively to the provision of a re-concentration membrane and/or a thermal treatment for re-concentrating, the re-concentration unit may be configured for accomplishing the re-concentrating by at least one of the group consisting of membrane distillation, vapor compression desalination, freezing treatment, electric dialysis, and *Ionenkraft* ("ion force", as implemented by Saltworks Technologies) processing.

In an embodiment, the apparatus comprises a fluid drive unit for driving the pre-purified fluid flowing from the ion exchange unit towards the re-concentration unit. Such a fluid drive unit may be a pump providing a (or an additional) pumping force for conveying the pre-purified fluid to the re-concentration unit and to build up sufficient pressure.

In an embodiment, at least part of the first cations and/or at least part of the first anions have an absolute value of a charge state in solution which is lower than an absolute value of a charge state of at least part of the second cations and/or at least part of the second anions in solution. More particularly, at least one of the first cations and the first anions may be monovalent cations or anions, and at least one of the second cations and the second anions may be multivalent (in particular bivalent) cations or anions. With such a configuration, the number of particles can be reduced during the forward (i.e. in a direction from the osmosis unit towards the re-concentration unit) ion exchange which has a positive impact on the efficiency of re-concentration. Apart from this, deposition may also be simplified by a higher charge state when a surface charging of the membrane (zeta potential of the membrane) repels the correspondingly charged particles, and the inversely charged counter ions are retained by the Donnan exclusion effect.

Additionally or alternatively, the first cations are smaller than the second cations and/or the first anions are smaller than the second anions. Therefore, the re-concentration membrane of the re-concentration unit can be provided with larger pores, thereby increasing the efficiency of the recovery of purified fluid at the re-concentration unit without the danger that a relevant number of the (relatively large) ions unintentionally passes the re-concentration membrane.

Additionally or alternatively, the exchanged second ions may have a better capability of being thermally deposited than the first ions (for example H₂SO₃ in water, which dissolves in liquid into H⁺ and HSO₃⁻). More generally, the ion exchange may be adjusted so that it improves the re-concentration procedure, for instance renders the latter more efficient.

In an embodiment, the first anions (Cl⁻) and the first cations (Na⁺) represent dissolved sodium chloride (NaCI). Sodium chloride has advantageous properties/behaviour promoting forward osmosis. Sodium chloride comprises monovalent cations and monovalent anions. Additionally or alternatively, the second anions (SO₄²⁻) and the second cations (Mg²⁺) may represent dissolved magnesium sulphate (MgSO₄). When substituting 2 Cl⁻ -> SO₄²⁻ and 2 Na⁺ -> Mg²⁺, the number of particles as relevant parameter for (at least membrane-based) re-concentration can be advantageously reduced. This reduces the osmotic pressure and therefore reduces the energy consumption, in particular for re-concentration. Both sodium chloride (NaCI) and magnesium sulphate (MgSO₄) are non-hazardous, cheap and easily available materials. However, as an alternative to the combination of sodium chloride and magnesium sulphate, any other combination of salts/ionic compounds (for instance LiCI instead of NaCI) may be used in other exemplary embodiments.

In an embodiment, the apparatus comprises an energy production unit configured for producing energy during operating the apparatus, in particular from an osmosis-based pressure level in the osmosis unit. When the pressure level of fluid in the draw solution chamber is increased due to forward osmosis, the potential energy or elevation energy involved in this increase of the pressure level may for instance be used for powering a turbine with energy of the fluid flowing downwardly again. For example, an energy production procedure which may be involved in an exemplary embodiment is pressure retarded osmosis.

In an embodiment, the energy production unit is configured for supplying at least part of the produced energy for operating the apparatus. Therefore, at least a part of the energy consumption of the apparatus may be contributed by energy produced during the fluid purification process. This further reduces the net energy consumption of the apparatus during operation.

In an embodiment, the apparatus comprises a pressure exchange unit (which may function as an energy recovery unit) configured for transmitting pressure between (in particular from) fluid propagating from the re-concentration unit to the ion exchange unit and (in particular to) fluid propagating from the ion exchange unit to the re-concentration unit. In particular, high pressure of fluid coming from the re-concentration unit can be transferred to low pressurized fluid flowing towards the re-concentration unit. Such a pressure exchange unit may transfer pressure between downstreaming and upstreaming fluid with a high degree of efficiency. Other processes of energy recovery can be implemented as well, for instance implementing a turbine, a Pearson pump (like the ones built by Spectra Watermakers), etc.

In an embodiment, the apparatus is configured as a closed cycle system in which the anions and the cations are recovered and reused within a closed cycle. That renders the fluid purification system particularly efficient and reduces the amount of waste.

In an embodiment, the apparatus is configured as at least one of the group consisting of a desalinisation plant (such as a seawater desalinisation plant or a brackwater desalinisation plant), a portable (in particular backpack-based) apparatus for mobile water purification, a domestic water purification apparatus for purifying water for a building, an industrial water purification apparatus for purifying water for a plant, an agricultural water purification apparatus, and a mining water purification apparatus. However, other applications are possible as well. In particular, the apparatus may be used for substantially any wastewater recycling and reclamation purpose, in particular for public water supply and waste disposal (for instance in the municipal sector).

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.
Figure 1 illustrates a schematic view of an apparatus for purifying fluid according to an exemplary embodiment not falling under the invention.
Figure 2 illustrates a flow chart illustrating a method of purifying fluid according to an exemplary embodiment not falling under the invention.
Figure 3 illustrates a schematic view of a purifying section of an apparatus for purifying fluid according to an exemplary embodiment not falling under the invention.
Figure 4 illustrates a schematic view of an ion removal section of an apparatus for purifying fluid according to an exemplary embodiment not falling under the invention.
Figure 5 illustrates a schematic view of an apparatus for purifying fluid according to an exemplary embodiment not falling under the invention.
Figure 6 illustrates a schematic view of an apparatus for purifying fluid according to another exemplary embodiment of the invention.

The illustrations in the drawings are schematic. In different drawings, similar or identical elements are provided with the same reference signs.

Before describing the figures in further detail, some basic considerations will be summarized based on which exemplary embodiments have been developed.

Exemplary embodiments of the invention may involve one or more of the following concepts:
- Forward osmosis can be used as a procedure for water purification (in particular for water treatment or water desalinisation). In a corresponding system, it is possible, but not necessary that the fluid to be purified by forward osmosis is pre-treated or pre-processed.
- Reversible ion exchanging can be optionally implemented in order to reduce the osmotic pressure of a draw solution for a membrane-based re-concentration. For example, the ion exchange may exchange NaCl into MgSO₄. However, many other combinations of materials are possible which can be exchanged by reversible ion exchange, in order to obtain an advantage for subsequent re-concentration.
- A re-concentration stage (preferably, but not necessarily, membrane-based and/or thermally based) may be implemented.
- Optionally, an energy recovery mechanism may be integrated in the fluid purification process (see reference numeral 118 in Figure 3).
- Optimally, an energy production mechanism may be integrated in the fluid purification process (see reference numeral 116 in Figure 3).

According to an exemplary embodiment of the invention, an osmotic water treatment is provided which can be used, for example, for drink water treatment, wastewater treatment, seawater desalinisation (including brackwater desalinisation), etc. with high throughput and low energy consumption. Exemplary embodiments may be applied in communal and industrial water supply and waste water management, in mining, in agriculture, in the military sector, in the navy, and for food processing. Also aircraft and spacecraft applications are possible according to exemplary embodiments of the invention. Another advantageous application of embodiments of the invention is an apparatus for purifying fluid comprising scrap such as oil and/or gas. The oil and/or gas be considered on the one hand as impurities to be removed from the fluid to be purified such as water, but may on the other hand also be considered as resources which can be exploited or extracted from the fluid to be purified as well.

Advantages of a system according to an exemplary embodiment of the invention are the high energy efficiency and its high robustness. Operation of such a system is simple and involves only a small effort in terms of required skills of operators (which renders the system particularly appropriate for low developed regions) and maintenance (which renders the system appropriate for difficult applications).

The amount of chemicals required for the process is very small, which reduces costs and pollution, and relaxes the logistic effort. In view of the small sufficient pressure values involved in the process, simple and cost efficient components may be implemented in the system. Small pressure values can be obtained by using ion exchange against multivalent ions, thereby reducing, in turn, the osmotic pressure of the draw solution. As a result, pressure tubes can be made of plastic rather than of steel. It is sufficient to implement simple valves and pumps, etc. As compared to thermal purification systems, the system for purifying fluid according to an exemplary embodiment of the invention can be implemented at any desired location, since it is independent of any economic heat source (such as heat dissipated by a power plant).

A functional principle involved in an exemplary embodiment of the invention is the physical phenomenon of forward osmosis according to which the solutions being separated from one another by a semipermeable membrane equilibrate their concentrations.

Without a separating membrane, the dissolved particles would be equally distributed in the entire volume of both sides of the chamber (under the influence of mixing entropy). By intentionally preventing this thanks to the provision of an osmosis membrane dimensioned to enable only the fluid to be purified (in particular water) to pass the membrane, but to disable this for both the contaminants and the ions, the only possibility of an equilibration is a dilution of the higher concentrated draw solution until the concentration difference is equilibrated or the hydrostatic pressure of the fluid column on the side of the diluted solution balances out the osmotic pressure. For this purpose, a draw solution is provided in the chamber on the side of the osmosis membrane opposing the fluid to be purified. This draw solution shall have an ion concentration being higher than the solution of the fluid to be filtered or purified (i.e. the raw fluid). Highly advantageously, the draw solution may be re-concentrated after each cycle, thereby separating the obtained pure fluid or product fluid. This allows to obtain synergistically purified fluid and a re-concentration of the osmotic agent (i.e. the osmotically active dissolved matter in the draw solution). By such a substantially loss-free recycling of the draw solution, a closed cycle process can be obtained.

On the basis of this described concept, the following further highly advantageous embodiments have been developed which will now be described in further detail:
An exemplary embodiment of the invention relates to a combined dialysis-osmosis system for fluid purification. In such a configuration, forward osmosis may be used for purifying problematic fluids to be purified, as occurring for instance in oil and gas industry, wastewater treatment, etc. A highly advantageous embodiment implements ammonium bicarbonate (NH₄HCO₃) in an osmotic closed cycle process, for instance for use as osmotic draw solution and/or for separation by degassing in a re-concentration procedure.

A challenge in fluid purification is that processes being capable of efficiently deionizing are in many cases woundable by impurities in supplied fluid, whereas processes being robust in terms of impurities in supplied fluid are in many cases only poorly capable of or even incapable of removing ions or salt.

According to an exemplary embodiment of the invention, an impure or highly contaminated raw fluid which comprises at the same time a high salt content (i.e. being charged with raw fluid ions) is divided in a dialysis or diffusion procedure in two separate process streams or flow paths. One of these streams or flow paths may comprise separately provided clean water (or any other appropriate carrier fluid) charged with at least a large part of raw fluid ions of the raw fluid to be purified. The other of these streams or flow paths can be completely or largely deionized (i.e. substantially salt free) as a result of the dialysis, but may still include remaining contaminants or impurities which are not capable of being removed by the dialysis. In this context, the term contaminant or impurity may also cover valuable fractions such as oil. By the extensive deionization (as a result of the dialysis) of the raw fluid to be purified, its previously (in particular negative) osmotic potential may be removed or lowered. As a consequence, efficient and far-reaching dewatering of this pre-treated raw fluid may be made possible. This is advantageous in terms of zero liquid discharge applications (for instance in oil and gas industry, desalination of seawater, etc., where waste needs to be disposed with high technical and economic effort).

After the described separation into two streams or flow paths, the extensively deionized raw fluid to be purified can be processed for instance by osmosis (in particular by direct osmosis or forward osmosis) for removing the further impurities. The dialysate, i.e. the carrier fluid enriched with the raw fluid ions, can be subsequently made subject to a strong concentration so that less high concentrated salt solution remains.

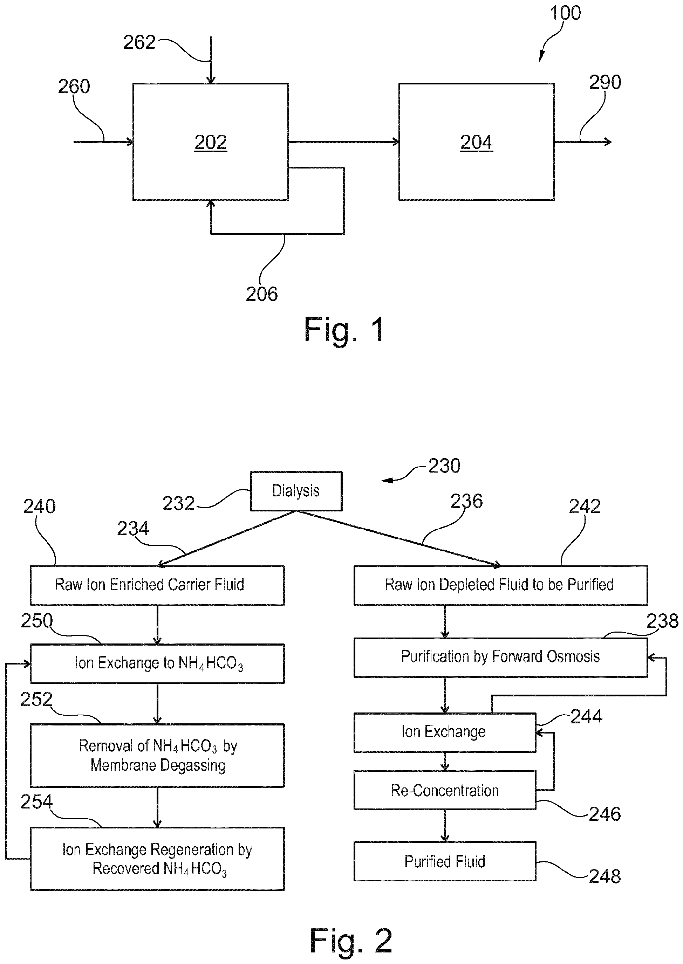

An advantage of such a process is as follows: when the raw fluid to be purified comprises ions (i.e. salt), its purification capability by osmosis is limited, since the ion concentration in the raw fluid to be purified increases with increasing dewatering, until a sufficient concentration gradient in the direction of the draw solution of the osmosis unit cannot be established any longer. For example, a raw fluid to be purified with a very high ion concentration cannot be purified, i.e. dewatered, at all by osmosis when the concentration in the raw fluid to be purified is hardly smaller or is even already higher than that in the draw solution. In addition, osmotic processes are in many cases not of linear efficiency. This means that the efficiency at a given gradient in a low concentration range is in many cases significantly higher than in a high concentration range. For instance, a concentration difference between a 3% sodium chloride draw solution against distilled water as raw fluid to be purified results in a significantly higher flow rate per membrane area than the same concentration difference of 3% between a 20% draw solution against a 17% raw fluid. Consequently, desalination or at least reduction of salt concentration in raw fluid to be purified prior to an osmosis procedure renders the osmosis significantly more efficient. However, as a side effect of such procedure, a carrier fluid with high salt concentration is generated. According to an exemplary embodiment of the invention, at least part of the carrier fluid may be recovered by a procedure which is described below in further detail (see Figure 2 and Figure 4).

A gist of an exemplary embodiment of the invention is to remove salt or ions in a fluid to be purified separately from a remaining filtration, wherein an exchange against ions is carried out which can be selectively removed from the fluid. In this context, the term "selectively" means that not the fluid or solvent (in particular water) is removed, but the dissolved exchanged ions. A further gist is to use dialysis, in particular for water purification, in order to separate raw fluid to be purified into separate streams or flow paths in order to treat them individually and separately. Yet another gist is to use ammonium bicarbonate for deionizing a corresponding dialysate.

An alternative to the implementation of ammonium bicarbonate in terms of separation by degassing (for instance for thermal degassing separation or membrane degassing separation) will be explained in the following. According to such an embodiment, the ions of a sodium chloride solution or the like can be concentrated (for instance up to 20%) using reverse osmosis or another appropriate membrane-based process. Subsequently, Na⁺ can be exchanged by Mg²⁺, and the latter can be deposited by nanofiltration (according to the Donnan balance, the complementary ions are also retained, i.e. in the present example Cl⁻, wherein the nanofiltration membrane retains the divalent magnesium). This embodiment allows ion exchange with a very high concentration in the supplied fluid, for instance up to 20% NaCI.

A further alternative to ion exchange after concentration by reverse osmosis (for instance up to 20%) would be to deionize by a crystallization device.

In the following, some preferred embodiments of the invention are summarized.

In one embodiment, dialysis is implemented as procedure preceding an actual purification procedure in order to separate salty or ionic raw fluid to be purified into two separately handleable process streams, in particular purified saltwater and salt free wastewater. In this context, the dialysis may be implemented for example as electrodialysis. Advantageously, such a dialysis procedure may be combined with an osmosis procedure for post- (or further) purifying the deionized raw fluid. It is also possible to combine such a dialysis procedure with another water preparation or treatment procedure. Optionally, such a dialysis procedure may be combined with a subsequent concentration of the stream or flow path enriched with the raw fluid ions (for instance sodium chloride). Such a concentration may be accomplished by electrodialysis or a membrane-based procedure (such as reverse osmosis). Such a concentration may reduce the process stream volume, in particular before being supplied to an ion exchange unit. In such a context, also desalination of water by salt binding fluids of other density compared to water can be implemented. Such salt binding fluids may be selected so that salt preferably binds to the fluid upon dissolution. It is furthermore possible that such salt binding fluids can be separated by phase separation, decanting or the like. Such salt binding fluids can be made subject of desalination in a more energy efficient way than water.

In a further embodiment, direct ion exchange can be used as an alternative to the above described dialysis stage.

In yet another embodiment, ion exchange of the salt in the dialysate against ammonium bicarbonate can be carried out, or against any other medium which can be degassed, in particular by membrane degassing. Optionally, ion exchange may be combined with the subsequent concentration of ammonium bicarbonate, for instance using electrodialysis or a membrane-based procedure (such as reverse osmosis). By taking this measure, the process stream volume may be reduced before the ammonium bicarbonate is deposited. It is also possible to combine this ion exchange with subsequent membrane degassing. More generally, this ion exchange may be combined with any additional procedure for degassing of the dissolved ionic constituents.

In still another exemplary embodiment of the invention, ammonium bicarbonate or any other medium which can be degassed by membrane degassing can be implemented as draw solution in osmotic purification. In particular, it can be combined advantageously with membrane degassing for draw solution regeneration.

A further embodiment in terms of implementing the above-described purifying section is the implementation of an additional fluid in the draw solution which has the property of binding to the salt. In other words, the ions shall migrate preferably in this further fluid. Beyond this, this further fluid shall have the property that it can be deposited by water of the draw solution (for instance by phase separation), and preferably it can be made subject to desalination with higher efficiency than water. For instance, this further fluid can be embodied as an ionic liquid.

In still another exemplary embodiment of the invention, the dialysate charged with the salt of the raw fluid to be purified can be used directly as draw solution in an osmotic purification stage. For instance, this can occur upstream or downstream of an ion exchange against ammonium bicarbonate, preferably prior to the regeneration (for instance by membrane degassing and cooling trap, etc.).

**Figure 1** illustrates a schematic view of an apparatus 100 for purifying fluid according to an exemplary embodiment not falling under the invention.

The apparatus 100 comprises an ion removal section 202 which is configured for removing at least part of raw fluid ions of the fluid to be purified, preferably but not necessarily by dialysis. A fluid inlet or fluidic interface 260 is connected to a fluid source (not shown) delivering raw fluid to be purified which still contains significant amounts of ions or salt to ion removal section 202. A further fluidic interface 262 of ion removal section 202 is connected to a clean water supply (not shown) delivering clean water as carrier fluid for the ion removal procedure described in Figure 4 in detail. Hence, an embodiment of the ion removal section 202 is shown in Figure 4. In the ion removal section 202, the fluid to be purified is separated into a first fluid portion comprising raw fluid ions in the carrier fluid and into a second fluid portion comprising fluid to be purified and further impurities, but now being largely or entirely free of the raw fluid ions. In the ion removal section 202, the first fluid portion can be supplied to feedback loop containing a carrier fluid recovery path 206 for recovering at least part of the carrier fluid.

Furthermore, a purifying section 204 is arranged downstream of the ion removal section 202 and is configured for purifying the fluid to be purified after removal of the raw fluid ions, preferably by a combination of forward osmosis (wherein non-osmotic purification processes can be implemented additionally or alternatively) and re-concentration, optionally with an ion exchange procedure in between. The second fluid portion is supplied to the purifying section 204 for subsequent removal of the further impurities. An embodiment of the purifying section 204 is shown in Figure 3. Purified fluid, in particular purified water, is supplied at a fluidic outlet 290 of the purifying section 204.

**Figure 2** illustrates a flow chart 230 illustrating a method of purifying fluid according to an exemplary embodiment not falling under the invention.

As can be taken from a block 232, at least part of raw fluid ions of a fluid to be purified is removed by dialysis with pure water or another carrier fluid. As a result of the dialysis, two separate fluid streams 234 and 236 or flow paths are obtained. In block 232, a raw water stream comprising dissolved salt (i.e. ions) and other impurities (for instance organic and inorganic impurities) as well as scraps or recyclable fractions (such as oil) is dialyzed, for example using a nanofiltration membrane allowing only monovalent ions such as Na⁺ and Cl⁻ to pass. However, the type of dialysis membrane can be selected depending on a dominant ion type in the raw fluid. The dialysis carried out in block 232 may for instance be a Donnan dialysis, a diffusion dialysis or a capacitive deionisation.

In the first flow path 234, carrier fluid which is charged with the raw fluid ions during dialysis is recycled, see block 240. The fluid or dialysate in the first flow path 234 may comprise pure water as carrier fluid which however carries the raw fluid ions as a result of the dialysis, but is apart from this pure. The carrier fluid may be supplied externally.

In the second flow path 236, the raw fluid to be purified but being now free or depleted of raw fluid ions undergoes a purification procedure, see block 242. Thus, the purification of the fluid to be purified is accomplished after the removal of the raw fluid ions and in a separate purification procedure. The fluid in the second flow path 236 still contains all remaining impurities apart from the raw fluid salt, as well as optionally scraps or recyclable fractions. This fluid is further purified in the second flow path 236 but, thanks to the depletion of raw fluid ions, advantageously does not have to fight against the (for instance negative) osmotic potential of the raw fluid with the raw fluid ions.

Referring to the first flow path 234 now in more detail, the carrier fluid enriched with the raw fluid ions is made subject to an ion exchange in a block 250. During this ion exchange, the dissolved salt constituted by the raw fluid ions (in particular predominantly sodium chloride) is substituted by other ions having however the property to be selectively removable from the carrier fluid, for instance by converting and separating them into the gas phase by heating or membrane degassing. One example for such other ions are NH₄⁺ and HCO₃⁻ of ammonium bicarbonate (NH₄HCO₃) as a substitute medium. Alternatively, the substitute medium may be a volatile solute, sulfurous acid, an ionic liquid, or a fluid with modifiable solubility.

These substituted ions can now be separated by membrane degassing, see block 252. Alternatively, also a thermal degassing is possible. Alternatively, it is also possible to concentrate the dissolved salt ions prior or after the ion exchange (for instance using an appropriate membrane process such as reverse osmosis), before the deposition by membrane degassing or thermal treatment. By taking this measure, it is possible to recycle almost the entire carrier fluid (such as water) required for the dialysis procedure and to obtain substantially deionized raw water, which can be dewatered substantially completely by direct osmosis.

For the mentioned separation according to block 252, it is possible to implement one of pressure-induced degassing, thermally induced degassing, cavitation, sonochemistry, sonication, ultrasonic degassing, vacuum degassing, freeze-pump-thaw cycles, or an inert gas treatment. It is also possible that the substitute medium is selectively removed from the carrier fluid by cryodeionisation rather than by degassing.

If desired, the now gaseous substitute medium (which may be composed predominantly of NH₃ and CO₂ for the given example) can be partially or completely recovered by converting it again into an ionic state, for instance by condensing it by a cooling trap or condensation trap. In such an event, the recovered substitute medium (see block 254) can be supplied back for the above-described ion exchange, i.e. to block 250.

Referring now to the second flow path 236 in more detail, the raw ion depleted fluid under purification can be purified by forward osmosis through an osmosis membrane into a chamber comprising dissolved first cations and first anions of a draw solution, as can be taken from a block 238.

As can be taken from a block 244, at least part of the first cations and the first anions can be substituted by second cations and second anions of an exchange medium by an ion exchange unit 108. This process is optional. In the ion exchange unit 108, it is for instance possible to use one or more of ammonium bicarbonate, a volatile solute, sulfurous acid, an ionic liquid, and a fluid with modifiable solubility.

In a subsequent re-concentration procedure corresponding to block 246, the purified fluid is separated after the ion exchange into further purified fluid and into a re-concentrate enriched with the exchange medium by degassing.

For the mentioned separation according to block 246, it is possible to implement one of pressure-induced degassing, thermally induced degassing, cavitation, sonochemistry, sonication, ultrasonic degassing, vacuum degassing, freeze-pump-thaw cycles, or an inert gas treatment.

As an alternative, it is also possible that the exchange medium is selectively removed from the further purified fluid by cryodeionisation.

As a result, purified fluid is obtained, see block 248.

**Figure 3** illustrates a schematic view of a purifying section 204 of an apparatus 100 for purifying fluid according to an exemplary embodiment not falling under the invention. The fluid to be purified flows from a fluid source 120 into an accommodation space 122 on the left-hand side of an osmotic membrane 104. As indicated schematically in Figure 3, an ion removal section 202 (for instance embodied as shown in Figure 4) can be provided upstream of reference numeral 120 and can supply fluid to be purified but having already undergone a raw fluid ion removal procedure in ion removal section 202.

The purifying section 204 comprises an osmosis unit 102 configured for pre-purifying the fluid to be purified by forward osmosis of the fluid to be purified through the osmosis membrane 104 into a chamber 106 comprising, as draw solution, dissolved first cations (in the shown embodiment Na⁺) and first anions (in the shown embodiment Cl⁻) of a first dissolved salt (sodium chloride, NaCl, in the shown embodiment). The osmosis membrane 104 is a semipermeable membrane which is configured (in particular in terms of pore size or zeta potential) so that it can be passed by water as the fluid to be purified, whereas the semipermeable membrane is configured so that it cannot be passed by contaminants in raw fluid to be purified and cannot be passed by the first cations and the first anions of the draw solution. The first cations and the first anions which are dissolved in a liquid carrier such as water are located in the chamber 106 prior to the start of a fluid purification process. For instance in the scenario of seawater desalinisation, the raw fluid may be seawater with contaminants and may also include some remaining dissolved sodium chloride, i.e. may also comprise a certain concentration of the first cations (Na⁺) and the first anions (Cl⁻), which has not been fully removed by ion removal unit 202. However, the concentration of the ions (i.e. cations and anions) shall be larger in the chamber 106 as compared to their concentrations in the raw fluid after having passed the ion removal unit 202. The forward osmosis unit 102 is configured for promoting, driven by the phenomenon of forward osmosis, a flow of the fluid to be purified through the osmosis membrane 104 while inhibiting a flow of contaminants from the fluid to be purified towards the chamber 106 and while inhibiting the first cations and the first anions from flowing through the osmosis membrane 104 towards the fluid to be purified. This draws pure water through the osmosis membrane 104, as indicated by arrows 124, while forcing the contaminants of the raw fluid ions depleted raw fluid (which may also be denoted as feed solution, feed water or feed fluid) to remain within the accommodation space 122.

As indicated by reference numeral 126, the so processed pre-purified fluid together with dissolved sodium chloride (Na⁺, Cl⁻) flows into an ion exchange unit 108. The ion exchange unit 108 is configured for exchanging the first cations (Na⁺) by second cations (Mg²⁺) and for exchanging the first anions (Cl⁻) by second anions (SO₄²⁻). Hence, this ion exchange exchanges monovalent small ions by bivalent larger ions which has a pronounced positive impact on the osmotic pressure (more precisely, advantageously reduces the latter), therefore improving the below described re-concentration efficiency. A skilled person will understand that other ions and/or other valent ratios are possible.

After this primary ion exchange, the ion exchanged pre-purified fluid is forwarded, via a pressure exchange unit 118, to a re-concentration unit 110, as indicated by reference numerals 128, 132. The pressure exchange unit 118, shown in detail in Figure 2, is configured for transmitting pressure between two opposing fluid flows between the ion exchange unit 108 and the re-concentration unit 110 and functions as an isobaric energy recovery component.

The purifying section 204 furthermore comprises a fluid drive unit 114 such as a pump for increasing pressure of the pre-purified fluid flowing from the ion exchange unit 108 towards the re-concentration unit 110.

According to an exemplary embodiment of the invention, the pressure exchange unit 118 and the fluid drive unit 114 can be integrally formed as one common entity, i.e. a pump with integrated energy recovery function fulfilling both tasks of pressure exchange between the fluid flowing upstream and downstream, as well as driving fluid in the upstream direction (such as a Clark pump or a Pearson pump, as manufactured by Spectra Watermakers).

The re-concentration unit 110 is configured for separating the pre-purified fluid after the ion exchange into purified fluid (which may also be denoted as permeate or product water or product fluid) and into a re-concentrate (which may also be denoted as retentate) enriched with the respective second cations (Mg²⁺) and second anions (SO₄²⁻). The re-concentration is accomplished by filtering the pre-purified fluid after the ion exchange by a re-concentration membrane 112 (and/or thermally), such as a nanofiltration membrane, of the re-concentration unit 110 so that the purified fluid passes the re-concentration membrane 112 and can be conveyed to a destination 130, such as an end user consuming the purified water.

Another part of the fluid including a high concentration of the second cations (Mg²⁺) and second anions (SO₄²⁻) is retained by the re-concentration membrane 112. This other part of the fluid including the high concentration of the second cations and second anions retained by the re-concentration membrane 112 is then conducted back via the pressure exchange unit 118 towards the ion exchange unit 108, the reference numerals 134, 136. Subsequently, the same ion exchange unit 108 as mentioned above exchanges back the second anions by the first anions (SO₄²⁻ -> 2 Cl⁻) and the second cations by the first cations (Mg²⁺ -> 2 Na⁺) in a further ion exchange procedure after the described re-concentration. Hence, the ion exchange unit 108 is highly advantageously configured for reversibly exchanging the ions prior to re-concentration and after re-concentration. Thus, the purifying section 204 operates as a closed cycle system in which the anions and the cations are continuously and repeatedly recovered and reused within a closed cycle without the need to supply new draw solution to the system for each batch of water to be purified.

As indicated by reference numeral 138, the recovered draw solution is then conducted back into the chamber 106, where it can be used for purifying new water to be purified and being delivered from the fluid source 120.

Contaminant enriched fluid which has been supplied into the accommodation volume 122 and which has been unable to pass the osmosis membrane 104 is forwarded to a drain 140 such as a wastewater disposal. It is also possible that the contaminant enriched fluid is introduced into a new purification cycle.

Optionally, an energy generation unit 116 may be provided which is configured for generating energy from an osmosis-based rising pressure level in the osmosis unit 102 (more specifically on the draw solution side). Simplified, one might say that a corresponding pressure increase in the draw solution contains energy which can be used. Reference is made to US 3,906, 250. As indicated schematically by various arrows in Figure 3, the energy generation unit 116 is configured for supplying the generated energy for operating one or more of the various components of the purifying section 204.

In the following, the operation of the purifying section 204 be described in further detail:
Purified water is drawn, in the osmosis unit 102, from the contaminated raw water side (left hand side of the osmosis membrane 104 according to Figure 3) onto the draw solution side (right hand side of the osmosis membrane 104 according to Figure 3), and thereby dilutes the draw solution in the chamber 106.

Optionally, this procedure can be simultaneously combined with a pressure retarded osmosis in order to produce energy. For example, this energy may be used in order to supply operation energy to one or more components of the purifying section 204.

The diluted draw solution obtained in chamber 106 after the forward osmosis then flows through the ion exchange unit 108. During a corresponding ion exchange procedure, the small and monovalent ions (Na⁺, Cl⁻) of the draw solution are substituted by larger and bivalent (or more generally multivalent, for instance trivalent) ions (Mg²⁺, SO₄²⁻). As a result, the osmotic pressure of the draw solution is significantly reduced. In the example of the ions according to Figure 3, two Na⁺ ions can bind to one SO₄²⁻ ion, and two Cl⁻ ions may bind to one Mg²⁺ ion, which allows to reduce the number of dissolved particles by a factor of two, which may consequently reduce the osmotic pressure by a factor of two.

In a subsequent membrane-based re-concentration this results in a high reduction of the needed hydraulic pressure and therefore the energy consumption. When implementing other re-concentration units 110 (i.e. other than membrane-based re-concentration units 110), the configuration of the ion exchange unit 108 may be adapted to obtain corresponding advantages which do not relate to a reduction of the osmotic pressure. An example, for thermally-based re-concentration, would be an exchange against ions which can be deposited thermally at a lower temperature than the ions used in the osmosis unit 102. A corresponding example would be CO₂-NH₃.

An embodiment of the invention, in which the ion exchange is reversible, is highly preferred although not mandatory.

Next, the ion exchanged solution flows through the pressure exchange unit 118. The pressure exchange unit 118 transfers a (preferably large, for example more than 50%) percentage (for instance 97%) of pressure of a fluidic flow of concentrate (flowing from the re-concentration unit 110 back to the ion exchange unit 108) to the diluted draw solution (flowing from the ion exchange unit 108 towards the re-concentration unit 110).

The forwardly flowing pre-purified water then passes the fluid drive unit 114 which may be a boost pump for providing a desired or required remaining pressure (i.e. a difference between a required pressure and a pressure of the forwardly flowing pre-purified water downstream of the pressure exchange unit 118).

Subsequently, the forwardly flowing pre-purified water flows towards the re-concentration membrane 112. A further chamber 150 in which the re-concentration membrane 112 is located and in which the forwardly flowing pre-purified water flows via a fluid inlet 152, has two fluid outlets 154, 156.

The permeate, i.e. the pure water and therefore the final product, flows towards the destination 130 via outlet 154.

The concentrate (or retentate) however flows back via outlet 156 to the pressure exchange unit 118 and transfers still present pressure with low loss to diluted draw solution flowing from the ion exchange unit 108 to the re-concentration unit 110, in order to pre-load the latter, in terms of pressure, for the re-concentration unit 110. It is also possible that pressure is used for powering a turbine for generating electric current, is supplied to a booster, etc.

After having left the pressure exchange unit 118, the concentrate flows, preferably but not mandatory in counter direction with respect to the flowing direction of the diluted draw solution, a second time through the reversibly operating ion exchange unit 108 and exchanges the divalent ions (Mg²⁺, SO₄²⁻) with the original monovalent ions (Na⁺, Cl⁻). This increases (for instance doubles) the osmotic pressure in the draw solution.

Finally, the concentrate flows back into the osmosis unit 102, and the cycle commences again from the beginning.

Next, the individual procedural steps and components of the purifying section 204 will be described in further detail.

Within the osmosis unit 102, any configuration is possible which is based on the principle of forward osmosis, i.e. in which a higher concentrated solution extracts a solvent such as water from a lower concentrated solution. This can be accomplished by an artificially prepared draw solution (as in Figure 3), whereas it is however also possible to implement osmotic dilution or osmotic energy recovery or the like. However, osmosis shall be combined with a (preferably reversible) ion exchange and a subsequent re-concentration. It is for instance possible to dilute fluid to be purified (such as the water) with auxiliary fluid (such as sewage or wastewater) having a lower osmotic pressure, so that the purification (for instance desalinisation) of the mixture of the actual fluid to be purified and the auxiliary fluid can then be accomplished with lower concentrated fluid.

What concerns the (preferably reversible) ion exchange as carried out in the ion exchange unit 108, it is advantageous to operate the ion exchange without external or separate regeneration solution by conducting the solution produced in the re-concentration unit 110 (if desired after a concentration procedure) a second time through the ion exchange unit 108 (preferably but not mandatory in opposite direction with regard to the initial flow direction). Advantageously, the purifying section 204 may, in each cycle, supply artificially produced clean diluted draw solution with predefined, reproducible and always identical composition to the ion exchange unit 108.

For regenerating or re-concentrating the draw solution, the re-concentration membrane 112 may be implemented which retains the dissolved ions in the re-concentration unit 110 by filtering, so that the ions are available for a regeneration of the reversible ion exchange procedure. For example, one of the following membrane separation procedures may be carried out in this context: nanofiltration, reverse osmosis (for instance adapted as seawater reverse osmosis, or brackwater reverse osmosis), ultrafiltration, microfiltration, etc.

However, it is also possible to implement, for re-concentration, a thermal process which may involve distillation. For instance, multi stage flash evaporation, multi effect distillation and/or solar distillation may be applied. Further alternatively, the re-concentration may be accomplished by membrane distillation, vapor compression desalination, freezing procedures, electro dialysis, or *Ionenkraft* methods. For the case of such non-membrane-based re-concentration procedures, the ion exchange in the ion exchange unit 108 can then exchange an osmotic agent against ions which have a positive impact on the subsequent re-concentration. For the example of thermal re-concentration, primary ions may be exchanged by secondary ions which can be deposited at lower temperature.

As mentioned above, an energy recovery procedure can be optionally involved in the process of purifying fluid. Examples for such an energy recovery are an isobaric energy recovery (for instance in the form of the pressure exchange unit 118), a turbine for generating electric current, a turbocharger, a pump (which may preferably substitute the fluid drive unit 114) with integrated energy recovery function (such as a Pearson pump or a Clark pump, as manufactured by Spectra Watermakers).

**Figure 4** illustrates a schematic view of an ion removal section 202 of an apparatus 100 for purifying fluid according to an exemplary embodiment not falling under the invention.

Fluidic interface 260 is connected to a fluid source (not shown) delivering raw fluid to be purified which still contains significant amounts of ions or salt. Further fluidic interface 262 is connected to a clean water supply (not shown) delivering clean water as carrier fluid for the procedure described in the following in detail. Both fluidic interfaces 260, 262 are connected to a dialysis unit 264 having a dialysis membrane 208. Via the dialysis membrane 208, the raw fluid to be purified and still containing the raw fluid ions on the one hand and the carrier fluid which may be substantially free of ions on the other hand may be brought in interaction so that a diffusion based equilibration or dialysis procedure occurs. As a result, the fluid to be purified and being now depleted of raw fluid ions undergoes a purification procedure in second flow path 236 and flows into purifying section 204. In contrast to this, in first flow path 234, the carrier fluid which is now charged with the raw fluid ions as a result of the dialysis is recycled. The first flow path 234 also corresponds to carrier fluid recovery path 206 for recovering at least part of the carrier fluid.

Before this recovering procedure will be described in further detail, reference is made to a schematic image 266 which illustrates the dialysis procedure in the dialysis unit 264. On the left hand side of image 266, the initial state at the beginning of the dialysis procedure is shown. Here, the raw fluid to be purified (see reference numeral 268) is contained in a volume surrounded by dialysis membrane 208 which is, in turn, surrounded by pure and salt free water as carrier fluid 270. After some time, as shown on the right hand side of image 266, membrane permeable ions 272 (such as Na⁺ and Cl⁻) pass the dialysis membrane 208 and are finally equally distributed over the entire volume. In contrast to this, remaining larger impurities 274 are impermeable for the dialysis membrane 208 and cannot pass the dialysis membrane 208. The result is a largely deionized raw fluid 268 on one side of the dialysis membrane 208, and carrier fluid 270 which is now charged with the raw fluid ions 272 on the other side of the dialysis membrane 208.

The raw fluid 268 to be purified hence flows to one side of the dialysis membrane 208. The dialysis membrane 208 is selected in accordance with the requirements of a certain application, for instance its pore size can be selected in accordance with the properties of the ions 272. In one embodiment, the dialysis membrane 208 is embodied as nanofiltration membrane for sodium chloride. On the other side of the dialysis membrane 208, clean, pure and/or deionized water is supplied as the carrier fluid 270. The salt or ions 272 will then tend to assume an equal distribution within the entire volume of the dialysis unit 264 as a result of the natural tendency to maximize the entropy of mixing. The remaining impurities 274 cannot pass of the dialysis membrane 208. When the volume of the dialysate is large compared to the raw fluid 268 to be purified, the raw fluid 268 can be rendered substantially salt free quickly and simply. Substantially the entire salt is then in the dialysate. The dialysate volume is usually several times larger than the raw fluid volume. Since the salt concentration in the raw fluid 268 can be halved in the scenario of a ratio between raw water volume to dialysate volume of 1:1, the ratio between raw water volume to dialysate volume may be smaller than one, for instance in a range between 1:4 and 1:6. It is also possible to implement multiple dialysis stages to further improve the ion removal efficiency.

Advantageously, at least part of the carrier fluid 270 is recycled or recovered to render the amount of necessary carrier fluid 270 for operating the apparatus 100 small and the amount of generated waste small as well. A corresponding procedure will be described in the following in further detail still referring to Figure 4:
For the described purpose, the ion removal section 202 is equipped with a carrier fluid recovery unit 210 configured for recovering carrier fluid 270 carrying the removed raw fluid ions 272 by again removing at least part of the raw fluid ions 272 from the carrier fluid 270. More specifically, the carrier fluid recovery unit 210 is configured for removing the raw fluid ions 272 from the carrier fluid 270 by performing, as a first procedure, an ion exchange in ion exchange unit 280 of the raw fluid ions 272 (for instance Na⁺ and Cl⁻ in the case of sodium chloride, NaCl, as salt) carried by the carrier fluid 270 by substitute ions (for instance NH₄⁺ and HCO₃⁻ ions provided by ammonium bicarbonate, NH₄HCO₃) of a substitute medium (here NH₄HCO₃).

The use of ammonium bicarbonate as the substitute medium has the advantage that it is selectively removable from the carrier fluid 270 by degassing in a degassing unit 282 (for instance a membrane degassing unit). Degassing can be accomplished in one embodiment by triggering a thermal separation of the substitute medium NH₄HCO₃ by heating it to a temperature (of for instance 60°C or more) at which its ions are converted to NH₃ and CO₂ gas. Additionally or alternatively, separation of the substitute medium NH₄HCO₃ from the carrier fluid 270 may be accomplished by membrane degassing. In such an embodiment, a temperature of 30°C or more may be sufficient to promote NH₃ and CO₂ gas to pass a hydrophobic membrane (i.e. being impermeable for water) when the vapor pressure is smaller on the opposing side of the membrane (where a vacuum may be formed or a strip gas may be present). Degassing as a separation technique has the huge advantage (in particular over nanofiltration) of being capable of removing substantially 100% of the substitute medium.

However, in an alternative embodiment (i.e. an alternative to the implementation of ammonium bicarbonate), it is possible to exchange lower valent ions or salt against higher valent ions or salt such as MgSO₄, in order to reduce the osmotic pressure. This may be followed by a concentration/deposition by nanofiltration, by another membrane-based separation technique or the like.

A fluidic output of the degassing unit 282 is the recovered carrier fluid 270 which may be fed back (via a fluidic feedback loop 294) into the dialysis unit 264 where it may be used as clean water. Another fluidic output of the degassing unit 282 carries the re-concentrate which corresponds to the substitute medium (here NH₄HCO₃). The latter can be supplied to a regeneration unit 212. The regeneration unit 212 is configured for at least partly regenerating the selectively removed substitute medium by converting it back into substitute ions, i.e. NH₄⁺ and HCO₃⁻ in the present example. In the shown embodiment, the regeneration unit 212 is configured for supplying the regenerated substitute medium, converted back into substitute ions, for a subsequent further ion exchange of raw fluid ions carried by carrier fluid. For this purpose, the regeneration unit 212 may for instance be configured as a condensing trap triggering condensation of the gaseous substitute medium back into the ionic state by temperature reduction. The recovered substitute medium (here NH₄HCO₃) can then be injected into the ion exchange unit 280 so that a closed loop is formed.

NaCI enriched fluid, as produced by the described procedure as well, can be concentrated in a concentration unit 278 to thereby recover pure water and highly concentrated or even crystalline NaCI.

Ideally, the salt water stream flowing into the first flow path 234 consists of pure water in which sodium chloride is now dissolved (wherein the described principle is applicable to other salts as well). This solution is supplied to the ion exchange unit 280 in which the sodium chloride is exchanged with ammonium bicarbonate. The latter can be deposited by membrane degassing in degassing unit 282. Within the membrane degassing unit 282, the NH₃ and the CO₂ migrate through a hydrophobic membrane (keeping away the water), since the vapor pressure on the other side (vacuum or a strip gas) is smaller. This is highly energy efficient as a heating of the entire volume of the dialysate (which has been significantly increased as well) is then dispensable. However, thermal degassing is another option, for instance when waste heat from a power plant is available. Coming back to the scenario of membrane degassing, the NH₃ and the CO₂ accumulate in the vacuum or strip gas on the other side of the degassing membrane, and the ionic substitute medium NH₄HCO₃ can then be recovered by membrane gassing (i.e. a reverse operating membrane degassing procedure) or by one or more condensing traps or cleaning units. With the recovered substitute medium NH₄HCO₃, it is possible to regenerate the ion exchange unit 280 in the next cycle.

Still referring to Figure 4, the inlet and the outside of the ion exchange unit 280 should be understood to be cross coupled, i.e.: in a normal operation as shown in Figure 4 and as indicated by a dotted arrow in Figure 4, the aqueous sodium chloride solution flows into the ion exchange unit 280 from the left top side and leaves the ion exchange unit 280 on the bottom right hand side as NH₄HCO₃ solution. In another operation mode (as indicated with text in parentheses in Figure 4), NH₄HCO₃ solution flows for regeneration from top on the right hand side to the bottom on the left hand side as sodium chloride solution (for instance for use as draw solution for osmosis, as waste, etc.). The ion exchange unit 280 may also be configured as two separate ion exchange units for serving the above mentioned two operation modes.

In yet another embodiment, it is possible to use the dialysate charged or loaded with salt upstream or downstream of the ion exchange unit 280 as draw solution for the osmosis stage on the second side of the process. The regeneration can be accomplished by membrane degassing as described above. It is also possible to use a common regeneration stage for both sides. A solution of NH₄HCO₃, which may be regenerated as described above, can also be used as draw solution. As an alternative to the regeneration by membrane degassing, it is also possible to regenerate by membrane filtration such as nanofiltration or reverse osmosis (for instance using MgSO₄).

Again referring to the regeneration unit 212, the use of a condensing trap or cleaning unit allows to condense the gas extracted in the membrane degassing unit 282, so that the condensed medium can be used in liquid recovered form for ion exchange regeneration.

An alternative to the use of dialysis technology at the position of dialysis unit 264, it is possible to directly conduct the raw fluid to be purified into an ion exchange stage in which the ions (for instance Na⁺, Cl⁻) in the water are exchanged for example against ammonium bicarbonate or another medium which is removable by membrane degassing, thermal degassing, nanofiltration, etc. largely or entirely from the ions. This allows to obtain a very high recovery rate. Also the exchange against other ions can be implemented as long it is possible to remove them largely or substantially completely from water, for instance thermally or by other processes (for instance implementing an exchange against MgSO₄ with subsequent nanofiltration).

In the case of raw fluids to be purified which are not compatible with ion exchange, it is possible to pre-treat and/or pre-filtrate such a raw fluid prior to the supply to an ion exchange unit, to render the raw fluid compatible with ion exchange.

**Figure 5** illustrates a schematic view of an apparatus 100 for purifying fluid according to an exemplary embodiment not falling under the invention.

Many of the elements of the apparatus 100 of Figure 5, in particular of the purifying section 204 thereof, are similar or identical to the embodiment described above referring to Figure 3. Thus, in the following, the differences between the embodiment of Figure 5 and the embodiment of Figure 3 will be mentioned.

According to Figure 5, the ion exchange unit 108 of the purifying section 204 is configured for exchanging first cations (Na⁺ in the present embodiment) and first anions (Cl⁻ in the present embodiment) used in a draw solution of the osmosis unit 106 by second cations (NH₄⁺ in the present embodiment) and second anions (HCO₃⁻ in the present embodiment). Thus, the exchange medium of the ion exchange unit 108 according to Figure 5 is ammonium bicarbonate (NH₄HCO₃) rather than MgSO₄, as in Figure 3. Advantageously, the second ions (i.e. NH₄⁺ and HCO₃⁻) belong to an exchange medium being at least partly selectively removable from the purified fluid by degassing, in particular by thermal degassing or membrane degassing, in a degassing unit 284 of the re-concentration unit 110. By this configuration, the re-concentration unit 110 separates the purified fluid after the ion exchange into further purified fluid and into a re-concentrate enriched with the exchange medium by degassing.

Optionally, it is further possible to implement an exchange medium concentration unit 216 configured for concentrating the exchange medium downstream of the ion exchange unit 108 and upstream of the re-concentration unit 110.

Beyond this, the embodiment according to Figure 5 comprises a regeneration unit 220 which is configured for regenerating the second cations and the second anions (i.e. NH₄⁺ and HCO₃⁻) from the separated gaseous exchange medium (i.e. NH₃ and CO₂). As a result, the regeneration unit 220 can supply the regenerated second cations and second anions back to the ion exchange unit 108, to thereby form a closed loop.

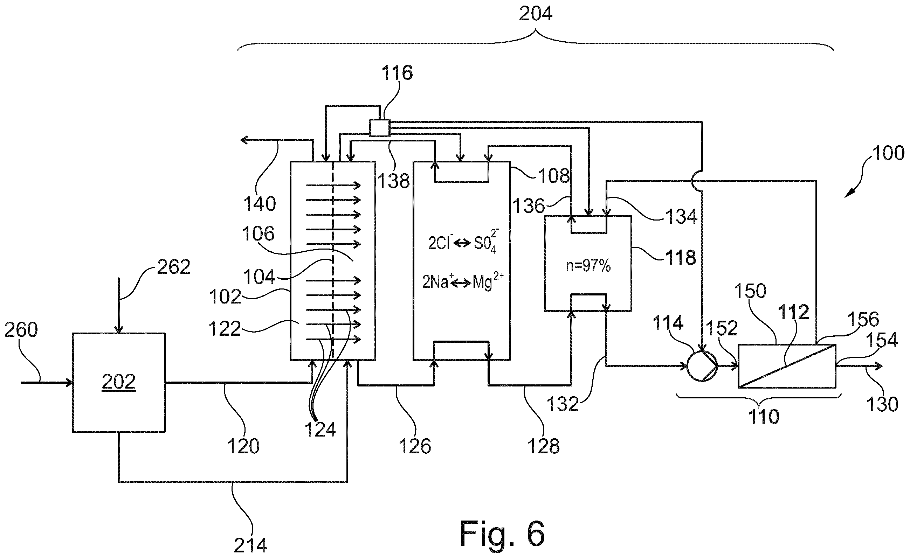

**Figure 6** illustrates a schematic view of an apparatus 100 for purifying fluid according to still another exemplary embodiment of the invention.

Many of the elements of the apparatus 100 of Figure 6, in particular of the purifying section 204 thereof, are similar or identical to the embodiment described above referring to Figure 3. Thus, in the following, the main difference between the embodiment of Figure 6 and the embodiment of Figure 3 will be mentioned. According to Figure 6, a draw solution supply path 214 is provided as a bypass conduit which is configured for supplying the first fluid portion from the ion removal section 202 to the osmosis unit 102 so that the raw fluid ion enriched first fluid portion serves as draw solution during osmosis. Therefore, the raw fluid ions can be recycled for use in the osmosis unit 106 rather than being disposed as waste. This results in a resource saving configuration.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

Implementation of the invention is not limited to the preferred embodiments shown in the figures and described above. Instead, a multiplicity of variants are possible which use the solutions shown and the principle according to the invention even in the case of fundamentally different embodiments. In an embodiment not falling under the invention, it is possible to use the already exchanged carrier fluid from the ion removal section as draw solution in the purifying section (i.e. in a bypass configuration), and not or not only prior to the exchange (i.e. as described referring to Figure 6, wherein after the ion exchange, the solution is bypassed as draw solution for the purifying section).

## Claims

1. An apparatus (100) for purifying fluid, the apparatus (100) comprising:
an ion removal section (202) configured for removing at least part of raw fluid ions of the fluid to be purified, wherein the ion removal section (202) is configured for bringing the fluid to be purified in interaction with a carrier fluid to thereby obtain a first fluid portion comprising the carrier fluid with raw fluid ions therein and a separate second fluid portion comprising the fluid to be purified and further impurities;
a purifying section (204) configured for purifying the fluid to be purified after removal of the raw fluid ions, wherein the purifying section (204) comprises an osmosis unit (102) configured for purifying the fluid to be purified, after removal of raw fluid ions, by osmosis; and
a draw solution supply path (214) configured for supplying at least part of the first fluid portion to the osmosis unit (102) so that the raw fluid ion enriched first fluid portion serves as draw solution during osmosis.

2. The apparatus (100) according to claim 1,
wherein the ion removal section (202) is configured for supplying the first fluid portion to a carrier fluid recovery path (206) for recovering at least part of the carrier fluid; and/or
wherein the ion removal section (202) is configured for supplying the second fluid portion to the purifying section (204); and/or
wherein the ion removal section (202) is configured for removing at least part of raw fluid ions of the fluid to be purified by dialysis or diffusion, in particular by at least one of electrodialysis, nanofiltration, multistage dialysis, Donnan dialysis, diffusion dialysis, capacitive deionisation, and supercapacitive deionisation; and/or
wherein the ion removal section (202) is configured for removing at least part of raw fluid ions of the fluid to be purified by dialysis between the fluid to be purified and an ion depleted or ion free carrier fluid across a dialysis membrane (208), in particular wherein the dialysis membrane (208) is configured to be permeable for at least part of the raw fluid ions and impermeable for other impurities of the fluid to the purified.

3. The apparatus (100) according to claim 1 or 2, comprising a carrier fluid recovery unit (210) configured for recovering carrier fluid carrying the removed raw fluid ions by removing at least part of the raw fluid ions from the carrier fluid.

4. The apparatus (100) according to claim 3, wherein the carrier fluid recovery unit (210) is configured for removing raw fluid ions from the carrier fluid by an ion exchange of raw fluid ions carried by the carrier fluid by substitute ions of a substitute medium.

5. The apparatus (100) according to claim 4, wherein the substitute medium is configured for being at least partly selectively removable from the carrier fluid by degassing, in particular based at least one of the group consisting of thermal separation of the substitute medium, separation from the carrier fluid by membrane degassing, pressure-induced degassing, thermally induced degassing, cavitation, sonochemistry, sonication, ultrasonic degassing, vacuum degassing, freeze-pump-thaw cycles, and inert gas treatment.

6. The apparatus (100) according to claim 4 or 5,
wherein the substitute medium is configured for being at least partly selectively removable from the carrier fluid by cryodeionisation; and/or
wherein the substitute medium comprises or consists of at least one of the group consisting of ammonium bicarbonate, a volatile solute, sulfurous acid, an ionic liquid, and a fluid with modifiable solubility.

7. The apparatus (100) according to claim 5 or 6, comprising a regeneration unit (212) configured for at least partly regenerating selectively removed substitute medium by converting it back into substitute ions, in particular wherein the regeneration unit (212) is configured for supplying the regenerated substitute medium, converted back into substitute ions, for a subsequent further ion exchange of raw fluid ions carried by carrier fluid.

8. The apparatus (100) according to claim 4, wherein at least part of the raw fluid ions has an absolute value of a charge state in solution which is lower than an absolute value of a charge state of at least part of the substitute ions in solution.

9. The apparatus (100) according to claim 1, wherein the ion removal section (202) is configured for removing at least part of raw fluid ions of the fluid to be purified by ion exchange.

10. The apparatus (100) according to any of claims 1 to 9, wherein the purifying section (204) comprises an osmosis unit (102) configured for purifying the fluid to be purified, after removal of raw fluid ions, by forward osmosis of the fluid to be purified through an osmosis membrane (104) into a chamber (106) comprising dissolved first ions, in particular first cations and first anions.

11. The apparatus (100) according to any of claims 1 to 10, wherein the purifying section (204) comprises an ion exchange unit (108) configured for exchanging at least part of the first ions, in particular at least part of at least one of the first cations and the first anions, by second ions, in particular at least one of second cations and second anions.

12. The apparatus (100) according to claim 11, wherein the second ions belong to an exchange medium being at least partly selectively removable from the purified fluid by degassing, in particular based at least one of the group consisting of thermal separation of the exchange medium, and separation from the purified fluid by membrane degassing.

13. The apparatus (100) according to claim 12, wherein the exchange medium comprises or consists of at least one of the group consisting of ammonium bicarbonate, a volatile solute, sulfurous acid, an ionic liquid, and a fluid with modifiable solubility.

14. The apparatus (100) according to any of claims 11 to 13, wherein the purifying section (204) comprises a re-concentration unit (110) configured for separating the purified fluid after the ion exchange into further purified fluid and into a re-concentrate enriched with the respective second ions, in particular second anions and second cations, or enriched with exchange medium to which the second ions belong.

15. The apparatus (100) according to any of claims 1 to 14, configured as at least one of the group consisting of a seawater desalinisation plant, a brackwater desalinisation plant, a portable, in particular backpack-based, apparatus for mobile water purification, a domestic water purification apparatus for purifying water for a building, an industrial water purification apparatus for purifying water for a plant, an agricultural water purification apparatus, a mining water purification apparatus, a municipal apparatus for purifying fluid, a naval apparatus for purifying fluid, an aircraft apparatus for purifying fluid, a spacecraft apparatus for purifying fluid, and an apparatus for purifying fluid comprising scrap such as oil and/or gas.

## Patentansprüche

1. Eine Vorrichtung (100) zum Reinigen von Fluid, wobei die Vorrichtung (100) Folgendes umfasst:
einen Ionenentfernungsabschnitt (202), der konfiguriert ist, um zumindest einen Teil der Rohfluidionen des zu reinigenden Fluids zu entfernen, wobei der Ionenentfernungsabschnitt (202) konfiguriert ist, um das zu reinigende Fluid in Wechselwirkung mit einem Trägerfluid zu bringen, um dadurch einen ersten Fluidteil, der das Trägerfluid mit Rohfluidionen darin umfasst, und einen separaten zweiten Fluidteil, der das zu reinigende Fluid und weitere Verunreinigungen umfasst, zu erhalten;
einen Reinigungsabschnitt (204), der konfiguriert ist, um das zu reinigende Fluid nach Entfernung der Rohfluidionen zu reinigen, wobei der Reinigungsabschnitt (204) eine Osmoseeinheit (102) umfasst, die konfiguriert ist zum Reinigen des zu reinigenden Fluids nach Entfernung von Rohfluidionen durch Osmose; und
einen Ziehlösung-Zufuhrweg (214), der konfiguriert ist, um mindestens einen Teil des ersten Fluidteils zu der Osmoseeinheit (102) zuzuführen, so dass der mit Rohfluidion angereicherte erste Fluidteil als Ziehlösung während der Osmose dient.

2. Die Vorrichtung (100) nach Anspruch 1,
wobei der Ionenentfernungsabschnitt (202) konfiguriert ist, um den ersten Fluidteil zu einem Trägerfluid-Rückgewinnungsweg (206) zur Rückgewinnung mindestens eines Teils des Trägerfluids zuzuführen; und/oder
wobei der Ionenentfernungsabschnitt (202) konfiguriert ist, um den zweiten Fluidteil zu dem Reinigungsabschnitt (204) zuzuführen; und/oder
wobei der Ionenentfernungsabschnitt (202) konfiguriert ist, um zumindest einen Teil der Rohfluidionen des zu reinigenden Fluids durch Dialyse oder Diffusion, insbesondere durch mindestens einer von Elektrodialyse, Nanofiltration, mehrstufiger Dialyse, Donnan-Dialyse, Diffusionsdialyse, kapazitiver Deionisierung und superkapazitiver Deionisierung zu entfernen; und/oder
wobei der Ionenentfernungsabschnitt (202) konfiguriert ist, um zumindest einen Teil der Rohfluidionen des zu reinigenden Fluids durch Dialyse zwischen dem zu reinigenden Fluid und einem ionenabgereicherten oder ionenfreien Trägerfluid über eine Dialysemembran (208) zu entfernen, insbesondere wobei die Dialysemembran (208) so konfiguriert ist, dass sie für zumindest einen Teil der Rohfluidionen durchlässig und für andere Verunreinigungen des zu reinigenden Fluids undurchlässig ist.

3. Die Vorrichtung (100) nach Anspruch 1 oder 2, umfassend eine Trägerfluid-Rückgewinnungseinheit (210), die konfiguriert ist, um Trägerfluid, das die entfernten Rohfluidionen trägt, durch Entfernen von zumindest einem Teil der Rohfluidionen aus dem Trägerfluid zurückzugewinnen.

4. Die Vorrichtung (100) nach Anspruch 3, wobei die Trägerfluid-Rückgewinnungseinheit (210) konfiguriert ist zum Entfernen von Rohfluidionen aus dem Trägerfluid durch einen Ionenaustausch von Rohfluidionen, die von dem Trägerfluid getragen werden, durch Ersatzionen eines Ersatzmediums.

5. Die Vorrichtung (100) nach Anspruch 4, wobei das Ersatzmedium so konfiguriert ist, dass es zumindest teilweise selektiv von dem Trägerfluid durch Entgasen entfernbar ist, insbesondere basierend auf mindestens einem aus der Gruppe, bestehend aus einer thermischen Trennung des Ersatzmediums, einer Trennung von dem Trägerfluid durch Membranentgasung, einer druckinduzierten Entgasung, einer thermisch induzierten Entgasung, einer Kavitation, einer Sonochemie, einer Ultraschallbehandlung, einer Ultraschallentgasung, einer Vakuumentgasung, Gefrierpumpen-Auftau-Zyklen und einer Inertgasbehandlung.

6. Die Vorrichtung (100) nach Anspruch 4 oder 5,
wobei das Ersatzmedium so konfiguriert ist, dass es durch Kryodeionisierung zumindest teilweise selektiv von dem Trägerfluid entfernt werden kann; und/oder
wobei das Ersatzmedium mindestens eines aus der Gruppe umfasst oder daraus besteht, bestehend aus Ammoniumbicarbonat, einem flüchtigen gelösten Stoff, schwefliger Säure, einer ionischen Flüssigkeit und einem Fluid mit modifizierbarer Löslichkeit.

7. Die Vorrichtung (100) nach Anspruch 5 oder 6, umfassend eine Regenerationseinheit (212), die zum zumindest teilweisen Regenerieren eines selektiv entfernten Ersatzmediums konfiguriert ist, indem es zurück in Ersatzionen umgewandelt wird, insbesondere wobei die Regenerationseinheit (212) konfiguriert ist, um das regenerierte Ersatzmedium, das zurück in Ersatzionen umgewandelt wurde, für einen anschließenden weiteren Ionenaustausch von Rohfluidionen, die von Trägerfluid getragen werden, bereitzustellen.

8. Die Vorrichtung (100) nach Anspruch 4, wobei zumindest ein Teil der Rohfluidionen einen Absolutwert eines Ladungszustands in Lösung aufweist, der niedriger als ein Absolutwert eines Ladungszustands von zumindest einem Teil der Ersatzionen in Lösung ist.

9. Die Vorrichtung (100) nach Anspruch 1, wobei der Ionenentfernungsabschnitt (202) konfiguriert ist, um zumindest einen Teil der Rohfluidionen des zu reinigenden Fluids durch Ionenaustausch zu entfernen.

10. Die Vorrichtung (100) nach einem der Ansprüche 1 bis 9, wobei der Reinigungsabschnitt (204) eine Osmoseeinheit (102) umfasst, die konfiguriert ist zum Reinigen des zu reinigenden Fluids nach Entfernung von Rohfluidionen durch Vorwärtsosmose des zu reinigenden Fluids durch eine Osmosemembran (104) in eine Kammer (106), die gelöste erste Ionen, insbesondere erste Kationen und erste Anionen, umfasst.

11. Die Vorrichtung (100) nach einem der Ansprüche 1 bis 10, wobei der Reinigungsabschnitt (204) eine Ionenaustauscheinheit (108) umfasst, die konfiguriert ist zum Austauschen von zumindest einem Teil der ersten Ionen, insbesondere zumindest einem Teil der ersten Kationen und/oder der ersten Anionen, durch zweite Ionen, insbesondere zweite Kationen und/oder zweite Anionen.

12. Die Vorrichtung (100) nach Anspruch 11, wobei die zweiten Ionen zu einem Austauschmedium gehören, das zumindest teilweise selektiv aus dem gereinigten Fluid durch Entgasen entfernbar ist, insbesondere basierend auf mindestens einer aus der Gruppe, bestehend aus einer thermischen Trennung des Austauschmediums und einer Trennung von dem gereinigten Fluid durch Membranentgasung.

13. Die Vorrichtung (100) nach Anspruch 12, wobei das Austauschmedium mindestens eines aus der Gruppe umfasst oder daraus besteht, bestehend aus Ammoniumbicarbonat, einem flüchtigen gelösten Stoff, schwefliger Säure, einer ionischen Flüssigkeit und einem Fluid mit modifizierbarer Löslichkeit.

14. Die Vorrichtung (100) nach einem der Ansprüche 11 bis 13, wobei der Reinigungsabschnitt (204) eine Rekonzentrationseinheit (110) umfasst, die konfiguriert ist zum Trennen des gereinigten Fluids nach dem Ionenaustausch in ein weiter gereinigtes Fluid und in ein Rekonzentrat, das mit den jeweiligen zweiten Ionen, insbesondere zweiten Anionen und zweiten Kationen, angereichert ist oder das mit Austauschmedium, zu dem die zweiten Ionen gehören, angereichert ist.

15. Die Vorrichtung (100) nach einem der Ansprüche 1 bis 14, die konfiguriert ist als mindestens eines aus der Gruppe, bestehend aus einer Meerwasserentsalzungsanlage, einer Brackwasserentsalzungsanlage, einer tragbaren, insbesondere auf Rucksäcken basierenden, Vorrichtung zur mobilen Wasserreinigung, einer Haushaltswasserreinigungsvorrichtung zum Reinigen von Wasser für ein Gebäude, einer industriellem Wasserreinigungsvorrichtung zum Reinigen von Wasser für eine Fabrik, einer landwirtschaftlichen Wasserreinigungsvorrichtung, einer Bergbauwasserreinigungsvorrichtung, einer kommunalen Vorrichtung zum Reinigen von Fluid, ein Vorrichtung für Schiffe zum Reinigen von Fluid, einer Vorrichtung für Flugzeuge zum Reinigen von Fluid; einer Vorrichtung für Raumfahrzeuge zum Reinigen von Fluid und einer Vorrichtung zum Reinigen von Fluid, das Abfall, wie zum Beispiel Öl und oder Gas, umfasst.

## Revendications

1. Un appareil (100) de purification de fluide, l'appareil (100) comprenant :
une section (202) d'élimination d'ions configurée pour éliminer au moins une partie des ions de fluide brut du fluide à purifier, la section (202) d'élimination d'ions étant configurée pour amener le fluide à purifier en interaction avec un fluide porteur pour obtenir ainsi une première partie de fluide comprenant le fluide porteur avec des ions de fluide brut en lui et une deuxième partie de fluide séparée comprenant le fluide à purifier et d'autres impuretés ;
une section de purification (204) configurée pour purifier le fluide à purifier après élimination des ions de fluide brut, la section de purification (204) comprenant une unité d'osmose (102) configurée pour purifier le fluide à purifier, après élimination des ions de fluide brut, par osmose ; et
une voie d'alimentation en solution d'extraction (214) configurée pour alimenter au moins une partie de la première partie de fluide à l'unité d'osmose (102) de sorte que la première partie de fluide enrichie en ions de fluide brut sert de solution d'extraction pendant l'osmose.

2. L'appareil (100) selon la revendication 1,
dans lequel la section (202) d'élimination d'ions est configurée pour alimenter la première partie du fluide à une voie (206) de récupération de fluide porteur pour récupérer au moins une partie du fluide porteur ; et/ou
dans lequel la section (202) d'élimination d'ions est configurée pour alimenter la deuxième partie de fluide à la section de purification (204) ; et/ou
dans lequel la section (202) d'élimination d'ions est configurée pour éliminer au moins une partie des ions de fluide brut du fluide à purifier par dialyse ou diffusion, en particulier par au moins une des méthodes suivantes : électrodialyse, nanofiltration, dialyse à plusieurs étages, dialyse de Donnan, dialyse par diffusion, déionisation capacitive et déionisation supercapacitive ; et/ou
dans lequel la section (202) d'élimination d'ions est configurée pour éliminer au moins une partie des ions de fluide brut du fluide à purifier par dialyse entre le fluide à purifier et un fluide porteur appauvri en ions ou exempt d'ions à travers une membrane de dialyse (208), en particulier dans lequel la membrane de dialyse (208) est configurée pour être perméable à au moins une partie des ions de fluide brut et imperméable aux autres impuretés du fluide à purifier.

3. L'appareil (100) selon la revendication 1 ou la revendication 2, comprenant une unité (210) de récupération de fluide porteur configurée pour récupérer le fluide porteur portant les ions de fluide brut éliminés en éliminant du fluide porteur au moins une partie des ions de fluide brut.

4. L'appareil (100) selon la revendication 3, dans lequel l'unité (210) de récupération de fluide porteur est configurée pour retirer du fluide porteur les ions du fluide brut par un échange ionique des ions du fluide brut portés par le fluide porteur par des ions de substitution d'un milieu de substitution.

5. L'appareil (100) selon la revendication 4, dans lequel le milieu de substitution est configuré pour être au moins partiellement sélectivement apte à être éliminé du fluide porteur par dégazage, en particulier sur la base d'au moins un membre du groupe constitué par la séparation thermique du milieu de substitution, la séparation du fluide porteur par dégazage à membrane, le dégazage induit par pression, le dégazage induit thermiquement, la cavitation, la sonochimie, la sonication, le dégazage par ultrasons, le dégazage sous vide, les cycles de gel-pompe-dégel et le traitement des gaz inertes.

6. L'appareil (100) selon la revendication 4 ou la revendication 5,
dans lequel le milieu de substitution est configuré pour être au moins partiellement sélectivement apte à être éliminé du fluide porteur par cryodéionisation ; et/ou
dans lequel le milieu de substitution comprend ou est constitué d'au moins un membre du groupe constitué par le bicarbonate d'ammonium, un soluté volatil, l'acide sulfureux, un liquide ionique et un fluide à solubilité modifiable.

7. L'appareil (100) selon la revendication 5 ou la revendication 6, comprenant une unité de régénération (212) configurée pour régénérer au moins partiellement un milieu de substitution éliminé sélectivement en le reconvertissant en ions de substitution, l'unité de régénération (212) étant en particulier configurée pour fournir le milieu de substitution régénéré, reconverti en ions de substitution, pour un échange ionique ultérieur supplémentaire d'ions de fluide brut portés par un fluide porteur.

8. L'appareil (100) selon la revendication 4, dans lequel au moins une partie des ions de fluide brut a une valeur absolue d'un état de charge en solution qui est inférieure à une valeur absolue d'un état de charge d'au moins une partie des ions de substitution en solution.

9. L'appareil (100) selon la revendication 1, dans lequel la section (202) d'élimination d'ions est configurée pour éliminer du fluide à purifier au moins une partie des ions de fluide brut par échange d'ions.

10. L'appareil (100) selon l'une quelconque des revendications 1 à 9, dans lequel la section de purification (204) comprend une unité d'osmose (102) configurée pour purifier le fluide à purifier, après élimination des ions du fluide brut, par osmose directe du fluide à purifier à travers une membrane d'osmose (104) dans une chambre (106) comprenant des premiers ions dissous, en particulier des premiers cations et des premiers anions.

11. L'appareil (100) selon l'une des revendications 1 à 10, dans lequel la section de purification (204) comprend une unité d'échange d'ions (108) configurée pour échanger au moins une partie des premiers ions, en particulier au moins une partie d'au moins un parmi les premiers cations et les premiers anions, par des deuxièmes ions, en particulier au moins un parmi des deuxièmes cations et des deuxièmes anions.

12. L'appareil (100) selon la revendication 11, dans lequel les deuxièmes ions appartiennent à un milieu d'échange et étant aptes à être éliminés au moins partiellement de manière sélective du fluide purifié par dégazage, en particulier sur la base d'au moins un membre du groupe constitué par la séparation thermique du milieu d'échange, et la séparation du fluide purifié par dégazage à membrane.

13. L'appareil (100) selon la revendication 12, dans lequel le milieu d'échange comprend ou est constitué d'au moins un membre du groupe constitué par le bicarbonate d'ammonium, un soluté volatil, l'acide sulfureux, un liquide ionique et un fluide à solubilité modifiable.

14. L'appareil (100) selon l'une des revendications 11 à 13, dans lequel la section de purification (204) comprend une unité de re-concentration (110) configurée pour séparer le fluide purifié après l'échange d'ions en un fluide purifié de façon supplémentaire et en un re-concentré enrichi avec les deuxièmes ions respectifs, en particulier des deuxièmes anions et des deuxièmes cations, ou enrichi avec le milieu d'échange auquel appartiennent les deuxièmes ions.

15. L'appareil (100) selon l'une des revendications 1 à 14, configuré comme au moins un membre du groupe constitué par une installation de dessalement de l'eau de mer, une installation de dessalement de l'eau de saumure, un appareil portable, en particulier portable sur le dos, pour la purification mobile de l'eau, un appareil de purification de l'eau domestique pour la purification de l'eau d'un bâtiment, un appareil de purification d'eau industrielle pour purifier l'eau d'une usine, un appareil de purification d'eau agricole, un appareil de purification d'eau minière, un appareil municipal pour purifier un fluide, un appareil naval pour purifier un fluide, un appareil d'avion pour purifier un fluide, un appareil de vaisseau spatial pour purifier un fluide, et un appareil pour purifier un fluide comprenant des déchets tels que du pétrole et/ou du gaz.
